# EUROPEAN PATENT APPLICATION

(11) **EP 0 630 864 A2**
(43) Date of publication of application: **28.12.1994**
(21) Application number: 94108010.3
(22) Date of filing: 24.05.1994
(51) Int. Cl.: C03B 37/012

(54) **Fabrication process of polarization-maintaining optical fiber**

(30) Priority: 24.05.1993 JP 121393/93; 31.05.1993 JP 129631/93; 04.06.1993 JP 134508/93; 04.06.1993 JP 134480/93; 08.06.1993 JP 137757/93; 08.06.1993 JP 137758/93
(71) Applicant: Sumitomo Electric Industries, Ltd., Osaka 541 (JP)
(72) Inventor: Takagi, Masahiro, c/o Yokohama Works of Sumitomo, Yokohama-shi, Kanagawa (JP); Chigusa, Yoshiki, c/o Yokohama Works of Sumitomo, Yokohama-shi, Kanagawa (JP); Suganuma, Hiroshi, c/o Yokohama Works of Sumitomo, Yokohama-shi, Kanagawa (JP); Sasaoka, Eisuke, c/o Yokohama Works of Sumitomo, Yokohama-shi, Kanagawa (JP); Yokota, Hiroshi, c/o Yokohama Works of Sumitomo, Yokohama-shi, Kanagawa (JP)
(74) Representative: Lehn, Werner, Dipl.-Ing.

(57) **Abstract**

Disclosed is a process for fabricating a polarization-maintaining optical fiber from a column preform in which a core is surrounded by a cladding based on SiO₂. This process comprises a surface treatment step for introducing a liquid, such as hydrofluoric acid solution which increases a width of a scratch formed on a through hole, into said through hole, the hole having been formed by boring the cladding in preparation for insertion of a rod of a stress-applying member.

## Description

### BACKGROUND OF THE INVENTION

### Field of the Invention

The present invention relates to a fabrication process of polarization-maintaining optical fiber.

### Related Background Art

A polarization-maintaining optical fiber has such structure that near a core body to become a transmission path, there are stress-applying members based on silica glass doped for example with B₂O₃ having a larger thermal expansion coefficient than the core body whereby the core body receives a non-axial symmetry pulling stress. Thus, the core body will have equivalent birefringence because of these stresses to show excellent optical transmission characteristics.

Conventionally known methods for fabricating such polarization-maintaining optical fibers are for example those as described in Japanese Laid-open Patent Application No. 61-174135, Japanese Laid-open Patent Application No. 1-153551, Japanese Laid-open Patent Application No. 62-12625, Japanese Patent Publication No. 63-1252, Japanese Patent Publication No. 63-28857 and U.S. Patent No.5,160,522.

### SUMMARY OF THE INVENTION

The present invention is directed to a polarization-maintaining optical fiber fabrication process for fabricating a polarization-maintaining optical fiber from a column preform in which a core body is buried in a cladding based on silica glass.

A polarization-maintaining optical fiber fabrication process according to the present invention comprises at least six steps.

A first step is of boring a through hole into the cladding away from the core and along the longitudinal direction of the core. A second step is of removing undesired impurities present on an inner surface in the through hole. A third step is of inserting a rod of a stress-applying members made of a material having a different thermal expansion coefficient from that of the cladding into the through hole. A fourth step is of sealing at least one end of the through hole formed in the cladding. A fifth step is of reducing the pressure in the through hole with the rod inserted therein down to a pressure lower than the atmospheric pressure. A sixth step is of drawing a preform for polarization-maintaining optical fiber formed at the fifth step.

The second step comprises a surface treatment step for introducing a liquid which increases a width of a scratch (crack groove) formed on the inner surface in the through hole, into the through hole, and the liquid increases a surface roughness of the inner surface in the through hole.

A hydrofluoric acid solution (HF) is effective as the liquid which increases the width of a scratch formed on the inner surface, and is effective as the liquid which increases the roughness of the inner surface. In other wards, an edge formed around a opening of the scratch is smoothed.

At the first step the through hole is bored into the cladding. A boring machine such as an ultrasonic boring machine is normally used to form the through hole. The boring machine has a harder member than the cladding in order to bore the through hole. Any hard member has contamination attached to the surface thereof. Also, a lot of dust is floating in the air. Therefore, after the first step of boring the through hole into the cladding, undesired impurities inevitably remain deposited on the inner surfaces in the through hole. In addition, scratches and crack grooves are formed on the inner surface in the through hole with processing at the first step. Such undesired impurities or scratches will result in increasing a transmission loss of finally fabricated polarization-maintaining optical fiber and lowering the mechanical strength thereof.

The silica glass-etching solution such as the hydrofluoric acid solution (HF) etches the inner wall surface in the through hole. By etching the inner wall surface with the liquid, the undesired impurities present on the inner wall surface are removed together with Sao₂ or silica glass in the surface layer of the inner wall surface in the through hole. The hydrofluoric acid solution (HF) etches Sao₂ or silica glass so that it increases the width of a scratch and a crack groove formed on the inner wall surface. A heating treatment of preform must be conducted in order to fabricate a polarization-maintaining optical fiber from the preform. For example, the preform must be fused at the sixth step to draw a fiber. Also, the preform is generally heated at the fourth step to seal the through holes.

If such heating treatments are conducted without using the hydrofluoric acid solution (HF), only openings of scratches and crack grooves are fused to stick, so that voids are formed in the deep ends of grooves. Gas is present in the voids formed in the deep ends of grooves. This gas increases its volume when heated. Consequently, there are bubbles formed in the finally fabricated polarization-maintaining optical fiber because of the increase in volume of the gas.

Existence of the bubbles will result in increasing a transmission loss of polarization-maintaining optical fiber and lowering the mechanical strength thereof. In contrast, the use of hydrofluoric acid solution (HF) increases the width of scratches and crack grooves, which minimizes such degradation of characteristics of polarization-maintaining optical fiber.

Although the hydrofluoric acid solution (HF) etches Sao₂ or silica glass, the etching rate changes if inorganics such as metals are present as the undesired impurities on the inner surfaces in the through holes. If the etching rate can be under control in forming the through holes, the characteristics of finally fabricated polarization-maintaining optical fiber can be made uniform.

Then, the second step comprises, prior to the surface treatment step, an inorganic dissolving step of introducing a liquid which dissolves the undesired inorganics (such as metals), into the through hole. The undesired-inorganics-dissolving liquid is a liquid using at least one liquid of hydrochloric acid, nitric acid and sulfuric acid. Among them, aqua regia, which is a mixture of hydrochloric acid and nitric acid at a ratio of 3:1, is effective to remove the undesired inorganics, because it can dissolve almost all metals. Also, since the undesired inorganics degrade the characteristics of produced polarization-maintaining optical fiber, removal of inorganics is preferable in this sense.

Performing this treatment, the undesired inorganics are dissolved in the liquid such as the aqua regia. However, undesired organic impurities still remain on the inner wall in the through hole.

Thus, the second step comprises an organic dissolving step of introducing a liquid which dissolves undesired organics, into the through hole. The undesired-organics-dissolving liquid is for example a liquid using at least one liquid of methanol, ethanol, propanol and acetone.

In the second step, it is preferred that ultrasonic waves are applied to the preform in order to effectively remove the undesired impurities. The ultrasonic waves can effectively remove the undesired impurities within a short time by vibrating the above liquids.

There are scratches and crack grooves formed on the inner wall in the through hole formed in the cladding. From the above-described reason, it is preferred that these scratches and crack grooves are removed or that the width of crack grooves is enlarged. After completion of the above steps, the polarization-maintaining optical fiber fabrication process according to the present invention further comprises a flame-polishing step of flame-polishing the inner surfaces in the through hole between the second step and the third step. The flame-polishing step is conducted by inserting a first burner into a through hole. Then the inner surface of through hole is uniformly fused to be smoothed. In particular, it is to be desired that in the flame-polishing step the first burner with flame is inserted into a through hole and at the same time the preform is rotated about the axis of through hole as the rotation axis. This can more uniformly smooth the inner surfaces in the through holes. In addition, the inner wall surfaces in the through holes can be more smoothed by heating the preform from the outside by means of a second burner.

The width of the scratches formed on the inner surface in the through hole is increased by using HF solution, but extremely increase is not preferable. It is desirable from the viewpoint of characteristics of fabricated polarization-maintaining optical fiber that the first step comprises a step of polishing the inner surface in the through hole up to the roughness of 0 to 1 µm, and is also desirable from the viewpoint of characteristics of fabricated polarization-maintaining optical fiber that the second step processes the inner surfaces in the through holes up to the roughness of 0 to 2 µm.

The method for heating the inner surface is not limited to the above flame-polishing step. According to the present invention, the process may further comprise, between the second step and the third step, a plasma heating step of keeping the inside of the through hole in an atmosphere of rare gas with pressure lower than the atmospheric pressure and changing the rare gas into plasma thereof. The rare gas plasma formation may be done by applying high-frequency waves to the preform. The rare gas plasma formation may be done by irradiating the preform with electromagnetic waves as well.

The present invention is also characterized in that the process comprises a first gas cleaning step between the surface treatment step in the second step and the third step, of introducing a gas which removes undesired impurities present in the through holes, into the through holes; wherein the first gas cleaning step comprises a step of introducing a first gas which reacts with inorganics when activated, into the through holes; a first gas activating step of activating the first gas; a step executed after the first gas activating step, of introducing a second gas which reacts with organics when activated, into the through holes; and a second gas activating step of activating the second gas.

The first gas is a chlorine-based gas or a mixed gas of a chlorine-based gas and oxygen gas. Also, the second gas is oxygen gas or a mixed gas of oxygen gas and a chlorine-based gas. When the first gas is activated, the activated gas reacts with undesired impurities of inorganics (metals) present on the inner wall in the through hole to be removed. After the inorganic (metal) impurities are removed and when the second gas is activated, the activated second gas reacts with undesired impurities of organics such as oil present on the inner wall in the through hole to be removed. The chlorine-based gas such as chlorine, carbon tetrachloride, thionyl chloride, or hydrogen chloride is a compound having the dehydration action and producing chlorine ions when decomposed.

The reason why the chlorine-based gas is introduced into the through holes before introduction of oxygen gas is to prevent the oxygen gas from reacting with inorganic impurities to form oxides. Since oxides are very stable compounds, it is too difficult to remove such oxides. The chlorine-based gas and oxygen gas may be simultaneously introduced into the through holes as a mixed gas thereof. Namely, the present invention has such a feature that the process comprises, between the surface treatment step in the second step and the third step, a step of introducing a mixed gas of a first gas which reacts with inorganics when activated and a second gas which reacts with organics when activated, into the through hole; and a gas activating step for activating the mixed gas.

The use of the mixed gas can remove undesired impurities present in the through holes and can reduce the time necessary for the fabrication process.

The first gas activating step and the second gas activating step can be effected by supplying heat to the first gas and to the second gas from the outside of preform or by changing the first gas and the second gas into plasma thereof. For the supply of heat, the preform is heated from the outside using a heater such as resistance furnace, high frequency furnace or burner. Moving the burner or preform in the longitudinal direction of preform, the undesired impurities attached to the inner wall in the through hole can be efficiently removed.

Also, the plasma formation may be done by applying high-frequency waves to the outside of preform or by irradiating the preform with electromagnetic waves.

The first gas and the second gas may be arranged to be introduced into the through hole between the third step and the fourth step. The second gas cleaning step of introducing these gases for removing the undesired impurities present in the through holes comprises a step of introducing a first gas which reacts with inorganics when activated, into the through holes, a first gas activating step of activating the first gas, a step executed after the first gas activating step, of introducing a second gas which reacts with organics when activated, into the through holes, and a second gas activating step of activating the second gas.

The second gas cleaning step has the same effect as the first gas cleaning step as described above. Since the stress-applying members are inserted into the through holes, the step removes undesired inorganic and organic impurities attached to the surface of the stress-applying member in addition to the undesired impurities attached to the inner wall surface in the through hole. It is to be desired that the heating temperature at this step is set lower than that at the first gas cleaning step, when the melting point of the stress-applying member is lower than that of the cladding. The melting temperature of the stress applying member is nearly equal to the melting temperature of the cladding.

The present invention has such a feature that the process comprises a second gas cleaning step between the third step and the fourth step, of introducing a gas which removes undesired impurities present in the through holes, into the through holes; wherein the second gas cleaning step comprises an ozone gas introducing step of introducing ozone gas into the through holes while irradiating the preform with ultraviolet rays. The ozone gas introduced into the through holes is activated when the preform is irradiated with ultraviolet rays. The ozone gas reacts with undesired impurities present in the through holes and thus removes the impurities.

It is desirable that the second gas cleaning step is employed together with a step of introducing a first gas which reacts with inorganics when activated, into the through hole. This combination can remove inorganic impurities as well as organic impurities.

The first gas contains a chlorine-based gas. From the viewpoint of impurity removal, the wavelength of ultraviolet rays is preferably shorter than 300 nm.

The present invention has a further feature of further comprising a step of introducing helium gas into through holes between the third step and the fourth step. It is to be desired in the polarization-maintaining optical fiber fabrication process according to the present invention that the pressure in the through holes is reduced as much as possible before the preform for polarization-maintaining optical fiber is drawn at the sixth step.

Since the helium gas has a large diffusion constant, it can be readily sucked in removing the helium gas in the through hole by a vacuum pump. Even if the helium gas remains, it negatively affects the characteristics of fabricated polarization-maintaining optical fiber, because the helium gas is an inert gas. Also, since the helium gas is an inert gas, it is safer than hydrogen gas in respect of fabrication process.

The helium gas may be arranged to be introduced into the through hole between the fifth step and the sixth step. The process may further comprise a step of reducing the pressure in the through hole to a pressure lower than the atmospheric pressure between the helium gas introducing step and the six step.

It is preferred that the rod of the stress-applying member inserted at the third step is cleaned using liquids similarly as the preform. Namely, there are undesired impurities attached to the surface of the rod of the stress-applying member similarly as on the inner surfaces in the through holes. Such undesired impurities could increase a transmission loss of finally produced polarization-maintaining optical fiber and reduce the mechanical strength thereof. The stress-applying member is first soaked in a liquid (for example, aqua regia, hydrochloric acid, nitric acid or sulfuric acid) which dissolves inorganics. The stress-applying member is then soaked in a liquid (acetone, methanol, ethanol or propanol) which dissolves organics.

The stress-applying member is then soaked in a liquid which etches silica glass, such as a hydrofluoric acid solution (HF). It is preferred that ultrasonic waves are applied to the preform or the stress-applying member at each liquid cleaning step. The stress-applying member is subjected to such treatments for the same reason as in the liquid cleaning step for the inner surfaces in the through holes.

After the cleaning with the hydrofluoric acid solution (HF), heat to fuse the surfaces of stress-applying members is supplied from the outside. This heat makes the surface of stress-applying member smoothed. It is preferred from the viewpoint of uniform smoothing that the stress-applying member is heated while rotated about the axis thereof as the rotation axis.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art form this detailed description.

### BRIEF DESCRIPTION OF THE DRAWINGS

Fig. 1 is a perspective view to illustrate a preform partly in section;
Fig. 2 is a perspective view of a polarization-maintaining optical fiber;
Fig. 3 is a flowchart to illustrate a fabrication process of the polarization-maintaining optical fiber according to the first embodiment;
Fig. 4 is an explanatory drawing to illustrate a step of boring the preform shown in Fig. 1;
Fig. 5 is a perspective view to show the preform with through holes bored therein, partly in section, in the manner shown in Fig. 4;
Fig. 6 is a perspective view to show vessels and an ultrasonic cleaner prepared for cleaning the preform with through holes bored therein;
Fig. 7 is an explanatory drawing to illustrate a state in which the preform is cleaned in a vessel as shown in Fig. 6;
Fig. 8 is an explanatory drawing to illustrate a state in which the preform is cleaned in a vessel as shown in Fig. 6;
Fig. 9 is an explanatory drawing to illustrate a state in which the preform is cleaned in a vessel as shown in Fig. 6;
Fig. 10 is an explanatory drawing to illustrate a state in which the preform is cleaned in a vessel as shown in Fig. 6;
Fig. 11 is a cross sectional view of the preform before it is cleaned with a hydrofluoric acid solution;
Fig. 12 is an explanatory drawing to illustrate a state in which the preform is cleaned in a vessel shown in Fig. 6;
Fig. 13 is an explanatory drawing to illustrate a state in which the preform is cleaned in a vessel shown in Fig. 6;
Fig. 14 is a cross sectional view of the preform after it was cleaned with a hydrofluoric acid solution;
Fig. 15 is a perspective view to illustrate an apparatus for flame-polishing;
Fig. 16 is an explanatory drawing to show the preform held by the apparatus of Fig. 15 as seen along the direction of arrow A;
Fig. 17 is a cross sectional side view of the preform as seen along the direction of arrow B in Fig. 15;
Fig. 18 is an explanatory drawing to illustrate influence of crack grooves;
Fig. 19 is an explanatory drawing to illustrate a state in which openings of crack grooves are fused to stick;
Fig. 20 is a cross sectional view of the preform to which a dummy tube is attached;
Fig. 21 is a perspective view of a glass lathe in which the preform is set;
Fig. 22 is a cross sectional view of the glass lathe shown in Fig. 21, as seen in the direction of arrows CC;
Fig. 23 is a cross sectional view to illustrate a state in which a side wall of the glass lathe is to be moved;
Fig. 24 is a schematic illustration to show a cross section of the preform set in the glass lathes shown in Fig. 22, in which chlorine gas and oxygen gas are introduced through a gas tube into through holes;
Fig. 25 is a perspective view to show the preform, partly in section, in which stress-applying members are inserted into through holes formed through the preform;
Fig. 26 is a schematic illustration to show a cross section of the preform set in the glass lathe shown in Fig. 22, in which stress-applying members are inserted into through holes and in which chlorine gas and oxygen gas are introduced through a gas tube into the through holes;
Fig. 27 is an explanatory drawing to illustrate a state in which one end of a dummy tube shown in Fig. 26 is fused to stick;
Fig. 28 is an explanatory drawing to illustrate a state in which the other end of the dummy tube shown in Fig. 27 is fused to stick;
Fig. 29 is an explanatory drawing to illustrate a state in which the preform is separated from the glass lathe while heated at the other end;
Fig. 30 is an explanatory drawing to illustrate a step of drawing the formed preform for polarization-maintaining optical fiber;
Fig. 31 is a flowchart to illustrate a cleaning step of stress-applying members;
Fig. 32 is a perspective view to show vessels and an ultrasonic cleaner prepared for cleaning the stress-applying members;
Fig. 33 is an explanatory drawing to illustrate a state in which rods of stress-applying members are cleaned in a vessel shown in Fig. 32;
Fig. 34 is an explanatory drawing to illustrate a state in which rods of stress-applying members are cleaned in a vessel shown in Fig. 32;
Fig. 35 is an explanatory drawing to illustrate a state in which rods of stress-applying members are cleaned in a vessel shown in Fig. 32;
Fig. 36 is an explanatory drawing to illustrate a state in which rods of stress-applying members are cleaned in a vessel shown in Fig. 32;
Fig. 37 is an explanatory drawing to illustrate a state in which rods of stress-applying members are cleaned in a vessel shown in Fig. 32;
Fig. 38 is an explanatory drawing to illustrate a state in which rods of stress-applying members are cleaned in a vessel shown in Fig. 32;
Fig. 39 is a perspective view to show rods of stress-applying members and an apparatus for flame-polishing the rods;
Fig. 40 is a graph to show a relation of cross talk (dB) of fabricated 1-km polarization-maintaining optical fiber with surface roughness (µm) of inner surfaces in through holes;
Fig. 41 is a graph to show a relation of surface roughness (µm) with etching time (min.) using hydrofluoric acid;
Fig. 42 is a graph to show a relation of cross talk (dB) of fabricated 1-km polarization-maintaining optical fiber with surface roughness (µm) of inner surfaces in through holes;
Fig. 43 is a drawing to show electrodes set on the periphery of preform fixed in the glass lathe shown in Fig. 21, in which high-frequency power is applied to the electrodes so as to produce plasma in through holes;
Fig. 44 is an explanatory drawing to illustrate a state in which chlorine gas and ozone gas are introduced into the preform fixed in the glass lathe shown in Fig. 21;
Fig. 45 is an explanatory drawing to illustrate a state in which the preform is irradiated with ultraviolet rays after ozone gas was introduced into the through holes as shown in Fig. 44;
Fig. 46 is an explanatory drawing to illustrate a state in which only one end of dummy tube is sealed and fiber drawing is done while suction is effected from the other end of dummy tube; and
Fig. 47 is an explanatory drawing to illustrate a method for fixing the rods of stress-applying members.

### DESCRIPTION OF THE PREFERRED EMBODIMENTS

An embodiment of a method for fabricating a polarization-maintaining optical fiber according to the present invention will be described with reference to the accompanying drawings. In the following description same elements will be denoted by same reference numerals and redundant description will be omitted.

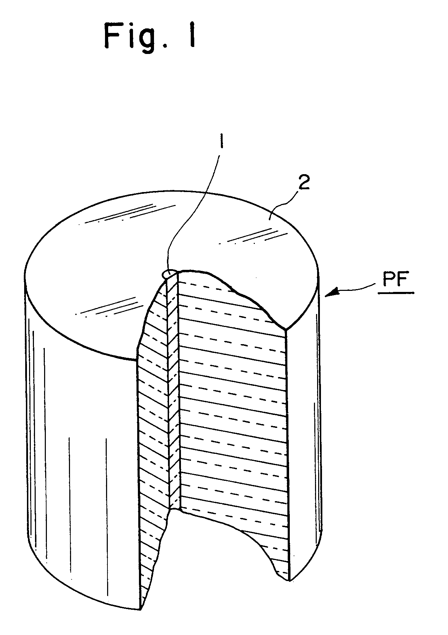

Fig. 1 is a perspective view to illustrate an optical fiber preform PF partly in section. The optical fiber preform PF has a core 1 and a cladding 2. The core 1 is buried in the cladding 2.

A refractive index of the core 1 is higher than that of the cladding 2. The core 1 and the cladding 2 are made of such materials as (GeO₂·Sao₂ and Sao₂), (P₂O₅·Sao₂ and Sao₂), (GeO₂·P₂O₅·Sao₂ and Sao₂), (GeO₂·Sao₂ and F·Sao₂) or (Sao₂ and F·Sao₂), respectively.

The optical fiber preform PF can be fabricated using the so-called VAD (Vapor Phase Axial Deposition) process. The optical fiber preform PF can be produced by another method. Other fabrication methods of optical fiber preform PF are the so-called MCVD (Modified Chemical Vapor Deposition) process, OVD (Outside Vapor Phase Deposition) process, rod in tube process, etc.

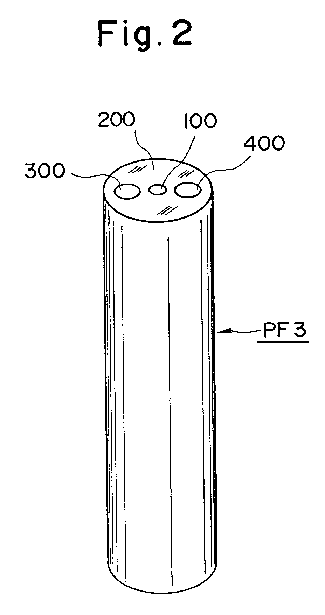

Fig. 2 is a perspective view to illustrate a polarization-maintaining optical fiber PF3. The polarization-maintaining optical fiber PF3 has a core 100, stress-applying members 300, 400 and a cladding 200. The core 100 is buried in the cladding 200. The stress-applying members 300, 400 are also buried in the cladding 200. The stress-applying members 300, 400 are located at positions symmetric with each other with respect to the core 100. The stress-applying members 300, 400 are different in thermal expansion coefficient from the cladding 200. A relative refractive index difference between the stress-applying members 300, 400 and the cladding 200 is -1.0 to +1.0 %. A relative refractive index difference between the core 100 and the cladding 200 is +0.1 to +3.0 %.

Described below is a method for fabricating the polarization-maintaining optical fiber PF3 shown in Fig. 2.

An optical fiber preform PF as shown in Fig. 1 is first prepared. Materials for (the core 1 and the cladding 2) are (GeO₂·Sao₂ and Sao₂), respectively. An amount of addition of GeO₂ in GeO₂·Sao₂ forming the core 1 is 4 wt%. The optical fiber preform PF is designed such that the polarization-maintaining optical fiber PF3 shown in Fig. 2 will have the cutoff wavelength of 1.25 µm. Diameters of the core 1 and the cladding 2 are 1 to 2.4 mm and 36 mm, respectively.

### First Embodiment

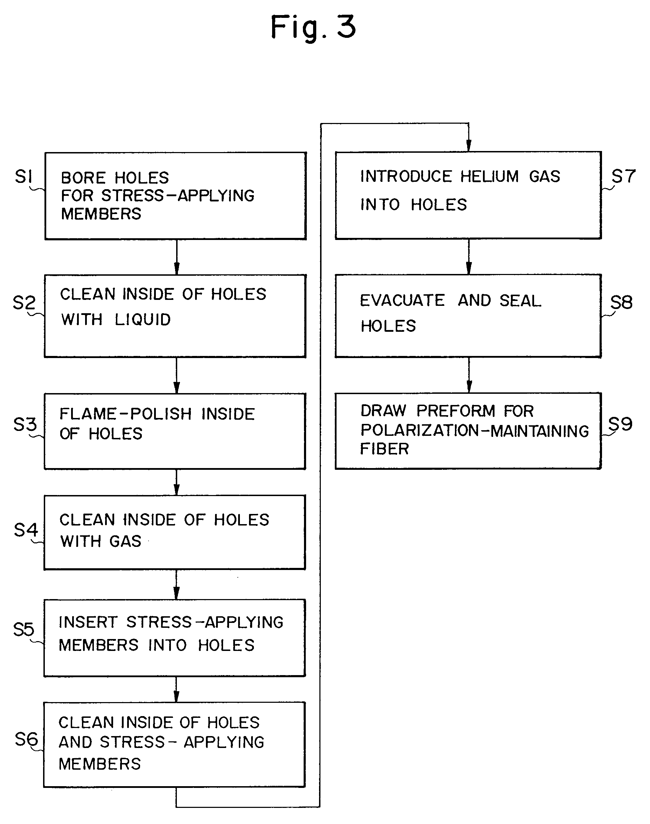

In the fabrication process of polarization-maintaining optical fiber according to the present embodiment, the optical fiber preform PF shown in Fig. 1 is processed according to the flowchart of Fig. 3. Steps in the processing will be described in accordance with the flowchart of Fig. 3.

### First Step

At the first step (S1) shown in Fig. 3, holes into which the stress-applying members are to be inserted are bored into the cladding of optical fiber preform PF.

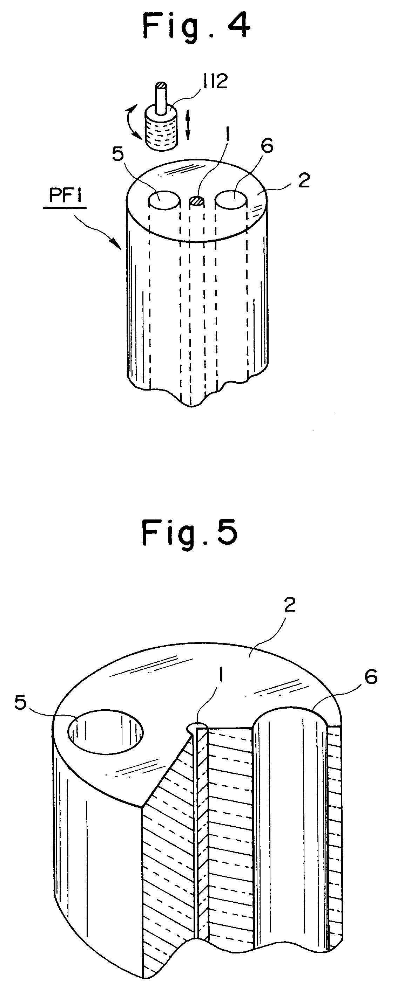

As shown in Fig. 4, a pair of through holes 5, 6 into which a pair of stress-applying members are to be inserted are first formed through the cladding 2 of preform PF in which the core 1 is buried in the center of the cladding 2. An ultrasonic drill equipped with a diamond grinding wheel 112 at the tip is used to form the through holes 5, 6. The diameter of diamond grinding wheel 112 is 10 mm and the grain size of cutting surface thereof is #2000. The diamond grinding wheel 112 is moved down at rate of 4 mm/min. while rotated at 3000 rpm, whereby the through holes 5, 6 are bored with inner diameter of about 10 mm apart from the core 1 and along the longitudinal direction of the core 1.

Then the inner walls in the through holes 5, 6 are polished using a honing machine having an unrepresented grinding wheel, up to maximum roughness of inner walls of about 0.5 µm and inner diameter of 10.5 mm. This grinding wheel has the grain size of cutting surface of #3000. An amount of one polishing is set to 20 µm. Following the above processes, a preform PF1 is formed with the through holes 5, 6 bored therein. Fig. 5 is a perspective view to show the preform PF1 with the through holes 5, 6 bored therein, partly in section.

### Second Step

At the second step (S2) shown in Fig. 3, the interior of the through holes 5, 6 in the preform PF1 is washed with liquid.

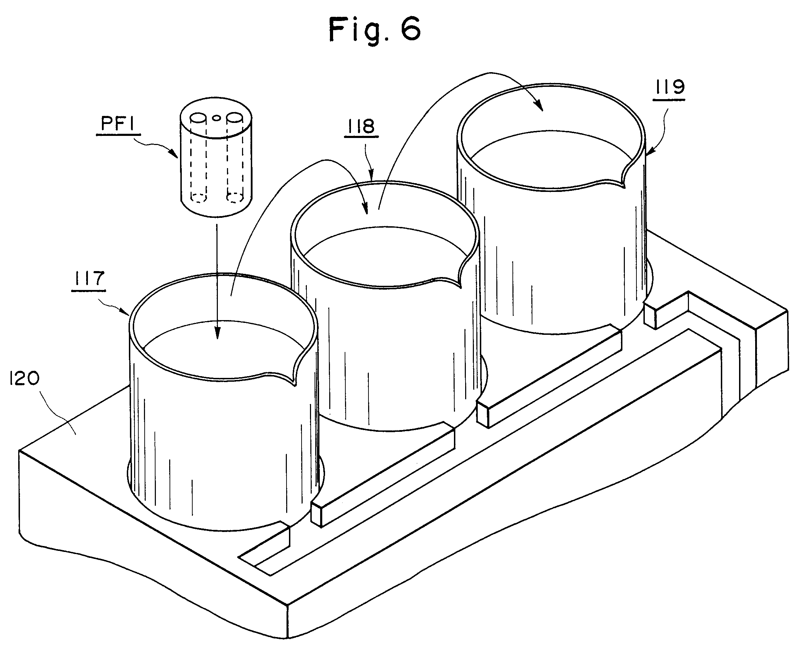

Three vessels 117, 118, 119 are first prepared as shown in Fig. 6. The first vessel 117 is filled with 5 % aqua regia (mixture of hydrochloric acid and nitric acid). The second vessel 118 is filled with ethyl alcohol. The third vessel 119 is filled with a 5 % HF (hydrofluoric acid) solution. These vessels 117, 118, 119 are set on an ultrasonic cleaner 120. Grooves are made on the ultrasonic cleaner 120, and the vessels 117, 118, 119 are set in the grooves.

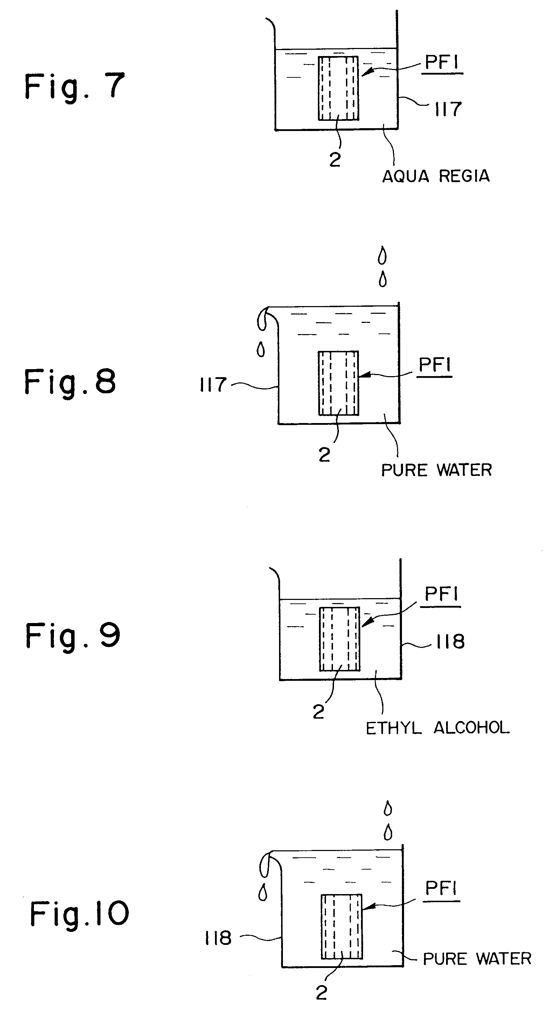

Ultrasonic cleaning is continued for one hour while the preform PF1 is soaked in the vessel 117 as shown in Fig. 7. Since the vessel 117 contains the aqua regia, the aqua regia dissolves metal impurities present on the inner walls in the through holes 5, 6 in the preform PF1, removing them from the inner walls in the through holes 5, 6. As shown in Fig. 8, pure water is poured into the vessel 117 to rinse the preform PF1 therewith. On this occasion the ultrasonic cleaner 120 may be operated to effect ultrasonic cleaning to rinse the preform PF1. Liquid overflowing out of the vessel 117 flows in the grooves on the ultrasonic cleaner 120 to be discharged to the outside.

After that, the preform PF1 is taken out of the vessel 117, and ultrasonic cleaning is performed for one hour while the preform PF1 is soaked in the vessel 118 as shown in Fig. 9. Since the vessel 118 contains ethyl alcohol, the ethyl alcohol dissolves organic impurities present on the inner walls in the through holes 5, 6 in the preform PF1, removing them from the inner walls in the through holes 5, 6. As shown in Fig. 10, pure water is poured into the vessel 118 to rinse the preform PF1 therewith. On this occasion the ultrasonic cleaner 120 may be operated to perform ultrasonic cleaning to rinse the preform PF1. Liquid overflowing out of the vessel 118 flows in the grooves on the ultrasonic cleaner 120 to be discharged to the outside.

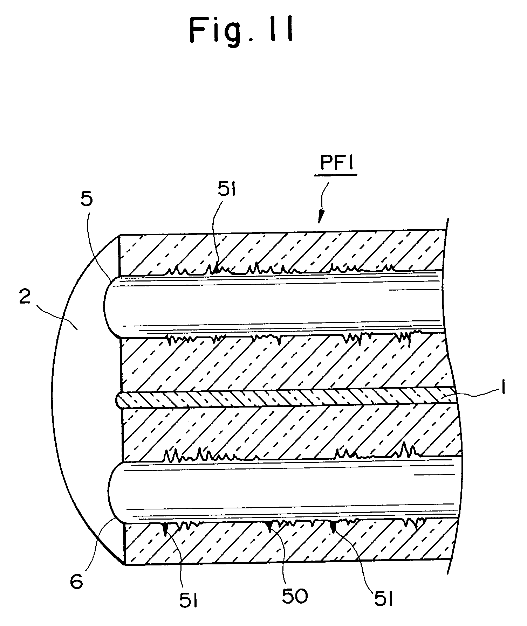

Fig. 11 is an explanatory drawing to illustrate a state in the through holes 5, 6 of preform PF1 after the above liquid cleaning.

The inner walls in the through holes 5, 6 have crack grooves (scratch) 50 formed by the boring step at Step 1. Inside the crack grooves 50 there are undesired impurities 51 which cannot be removed by the above liquid cleaning. Openings of the crack grooves 50 are relatively small.

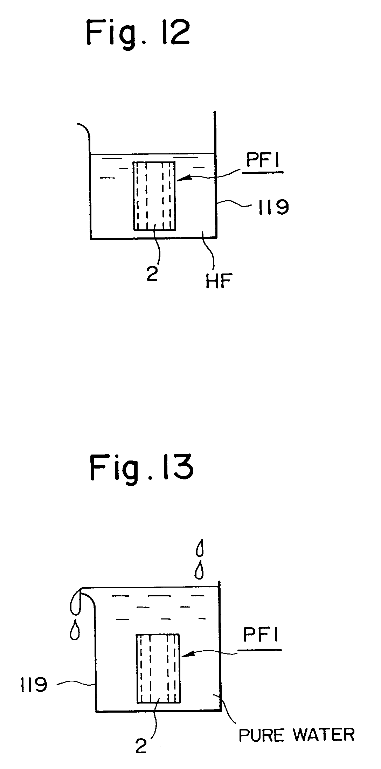

To remove these impurities 51, the preform PF1 is taken out of the vessel 118 and ultrasonic cleaning is conducted for 5 minutes while the preform PF1 is soaked in the vessel 119 as shown in Fig. 12. Since the vessel 119 contains the HF solution, the impurities 51 present on the inner walls in the through holes 5, 6 in the preform PF1 are removed thereby. The removal of the impurities is effected by the corrosive action of hydrofluoric acid against Sao₂ to slightly etch the inner walls in the through holes 5, 6. As shown in Fig. 13, pure water is poured into the vessel 119 to rinse the preform PF1 therewith. On this occasion the ultrasonic cleaner 120 may be operated to conduct ultrasonic cleaning to rinse the preform PF1. Liquid overflowing out of the vessel 119 flows in the grooves on the ultrasonic cleaner 120 to be discharged to the outside.

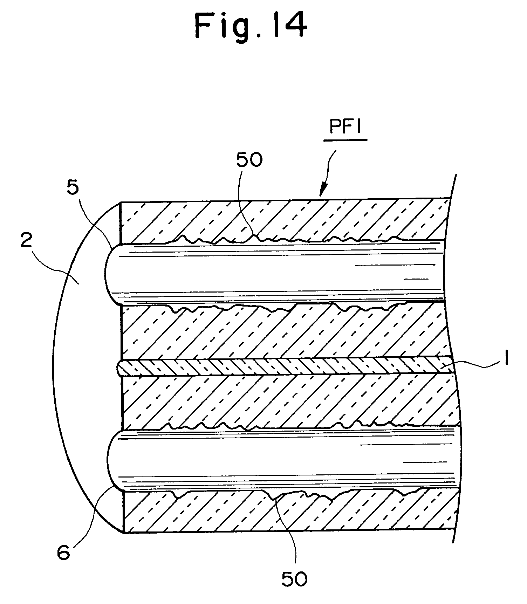

Fig. 14 is an explanatory drawing to illustrate a state inside the through holes 5, 6 in the preform PF1 after completion of the cleaning using the hydrofluoric acid. The impurities 51 in the crack grooves 50 shown in Fig. 11 are removed together with Sao₂ or silica glass upon the slight etching of the inner walls in the through holes 5, 6. The openings of crack grooves 50 become enlarged as compared with those in Fig. 11.

After that, the preform PF1 is taken out of the vessel 119 and dried in an unrepresented clean bench.

In this step inorganic impurities remaining in the preform PF1 can be removed by using the aqua regia (mixed solution of hydrochloric acid and nitric acid) as the first liquid solvent in the cleaning process in fabricating the preform PF2 for polarization-maintaining optical fiber.

Also, the use of ethyl alcohol as the second liquid solvent can effect removal mainly of organic impurities remaining in the preform PF1 , which could not be fully removed by using only a chlorine gas employed in the conventional methods. This can prevent production of bubbles due to gasification of organic impurities and can achieve great improvements in optical transmission characteristics and in mechanical strength.

Further, applying ultrasonic waves to the cleaning system, the removal effect of residual impurities by the cleaning system can be improved and the cleaning time can be reduced.

Further, the impurities remaining in the fine pits can be surely removed by finely etching the inner surfaces of preform PF1 with hydrofluoric acid as the third liquid solvent. Also, by using the hydrofluoric acid after the impurities in the cleaning system were removed by the aqua regia and the ethyl alcohol, selective etching may be avoided in contaminated portions in the preform PF1 , so that smoothness of inner surfaces of preform PF1 can be maintained, whereby the production of bubbles can be avoided after fiber drawing.

Also, since the inner wall surfaces in the through holes 5, 6 can be uniformly cleaned and smoothed, curvature of inner wall surfaces as seen in the conventional gas phase etching will not occur, which results in greatly reducing production of bubbles in the polarization-maintaining optical fiber PF3. Further, the liquid phase etching in the cleaning process can greatly remove the crack grooves 50 and enlarge the openings of crack grooves 50, which can prevent voids from being formed inside the cracks 50 when the preform PF1 is heated so as to melt in the below-described process.

Although this step employed the aqua regia as the first liquid solvent with inorganic dissolution effect for cleaning the inner surfaces in the through holes 5, 6, the first liquid solvent may be hydrochloric acid, nitric acid, or sulfuric acid. Also, although this step employed the ethyl alcohol as the second liquid solvent with organic dissolution effect for cleaning the inner surfaces in the through holes 5, 6, the second liquid solvent may be methanol, propanol or acetone. In addition, although this step employed the hydrofluoric acid as the third liquid solvent with the corrosive effect on the inner surfaces in the through holes 5, 6, the third liquid solvent may be any solvent as long as it has the corrosive effect against the preform.

### Third Step

At the third step (S3) shown in Fig. 3, the inner surfaces in the through holes 5, 6 are flame-polished.

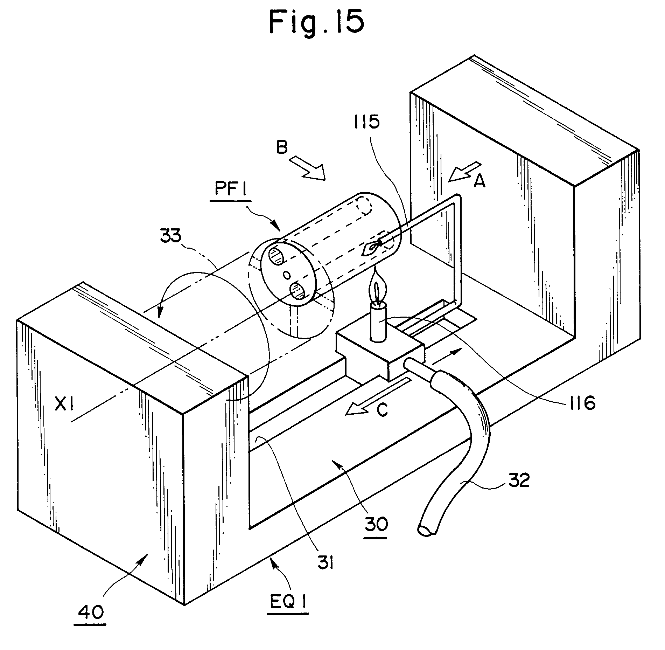

Fig. 15 is a perspective view to show an apparatus EQ1 for flame-polishing the inner surfaces in the through holes 5, 6 and the preform PF1 set in the apparatus EQ1. As shown, the apparatus EQ1 has an oxy-hydrogen burner 116 which can slide along a groove 31 cut on a bottom plate 30. In the following description the longitudinal direction of groove 31 is taken as the X direction. A gas tube 32 is connected to the oxy-hydrogen burner 116. Oxygen and hydrogen is supplied through the gas tube 32. An oxy-hydrogen burner 115 communicates with the oxy-hydrogen burner 116. The oxy-hydrogen burner 115 is so arranged that the longitudinal direction thereof is parallel to the X direction.

The apparatus EQ1 has a side wall 40 projecting upward from the bottom surface 30. A chuck 33 is mounted on the side wall 40 so as to be rotatable about X1 axis parallel to the X direction. The chuck 33 grasps the preform PF1.

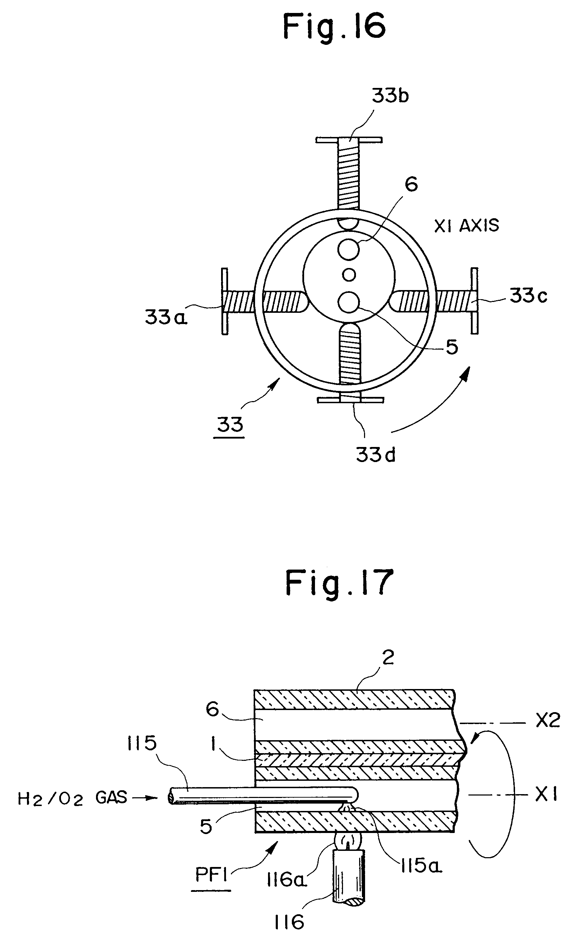

Fig. 16 is a drawing to show the preform PF1 grasped by the chuck 33 in Fig. 15, as seen in the direction of arrow A. As shown, the preform PF1 is held by holding members 33a-33d such as screws such that the axis of through hole 5 is coincident with the X1 axis.

Subsequently, as shown in Fig. 15 and Fig. 17 viewing the preform PF1 of Fig. 15 in the direction of arrow B, the oxy-hydrogen burner 115 with outer diameter of about 7 mm is moved in the direction of arrow C, so that the oxy-hydrogen burner 115 goes into the through hole 5. While the oxy-hydrogen burner 115 is in the through hole 5, the chuck 33 rotates the preform PF1 about the center axis X1 of through hole 5.

A mixed gas of 20-liters/min.-hydrogen gas and 10-liters/min.-oxygen gas is supplied to the oxy-hydrogen burner 115 so as to produce flame 115a. Since the preform PF1 is rotated while moving the oxy-hydrogen burner 115 in the direction of arrow C, the coarse inner wall surface in the through hole 5 is fused by the flame 115a. Accordingly, the inner wall in the through hole 5 is totally and uniformly fused and flame-polished.

The temperature of flame-polishing is preferably in the range of 1300 °C to 1600 °C from the viewpoint of smoothing the inner wall in the through hole 5.

Also, a mixed gas of 20-liters/min.-hydrogen gas and 10-liters/min.-oxygen gas is supplied to the oxy-hydrogen burner 116 so as to produce flame 116a. During the flame-polishing of the inner wall in the through hole 5 by the oxy-hydrogen burner 115, the flame 116a of outside burner 116 simultaneously heats the outside of preform PF1 as well. Similarly, for flame-polishing of through hole 6, the preform PF1 is set such that the axis X2 of through hole 6 becomes coincident with the rotation axis of the chuck 33, and the same process as the above one for the through hole 5 is carried out.

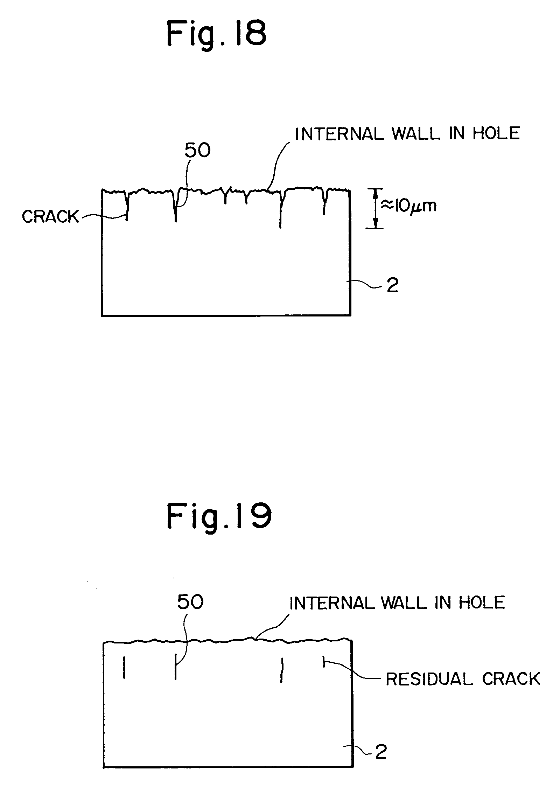

In case the liquid cleaning with hydrofluoric acid is omitted as shown in Fig. 18 and if heating of the cladding 2 as described later is conducted, the opening portions of crack grooves 50 are fusion-spliced as shown in Fig. 19 to form voids inside the crack grooves. The voids could be a cause to produce bubbles when the cladding 2 is heated in the process to fabricate the polarization-maintaining optical fiber PF3.

After the liquid cleaning using the hydrofluoric acid at the second step (S2) preliminarily removed most of the crack grooves, the flame-polishing step (S3) enlarges the opening portions of crack grooves 50, which can greatly reduce voids remaining at the deep ends of crack grooves 50 in the cladding 2, as could appear when only the openings of crack grooves 50 are fused to stick.

### Fourth Step

At the fourth step (S4) shown in Fig. 3, the inside of through holes 5, 6 is cleaned using gas.

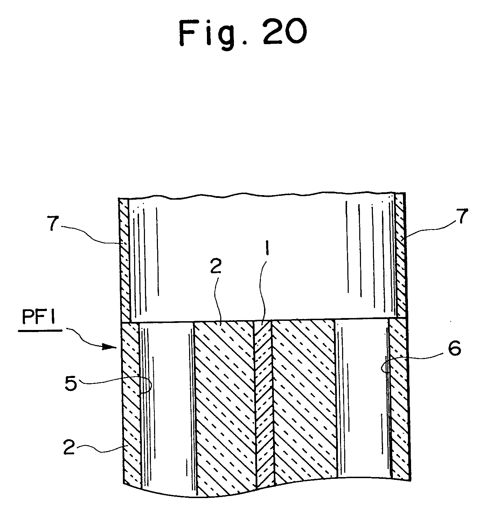

First, an annular dummy tube 7 made of quartz glass is attached in close fit with one end of the cladding 2, as shown in the partial longitudinal cross section in Fig. 20. Another annular dummy tube 8 made of quartz glass is also attached to the other end of the cladding 2. The dummy tube 8 is fusion-spliced to the cladding 2.

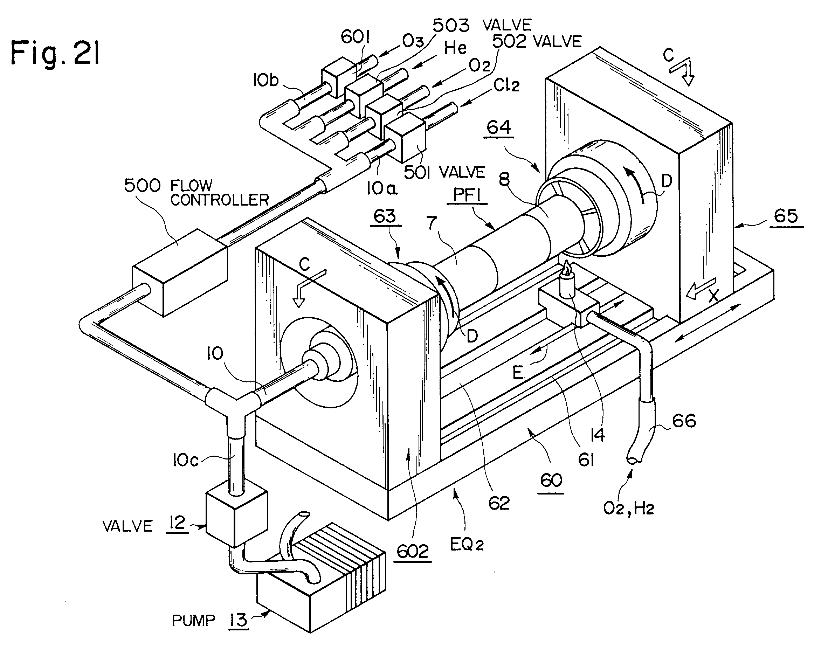

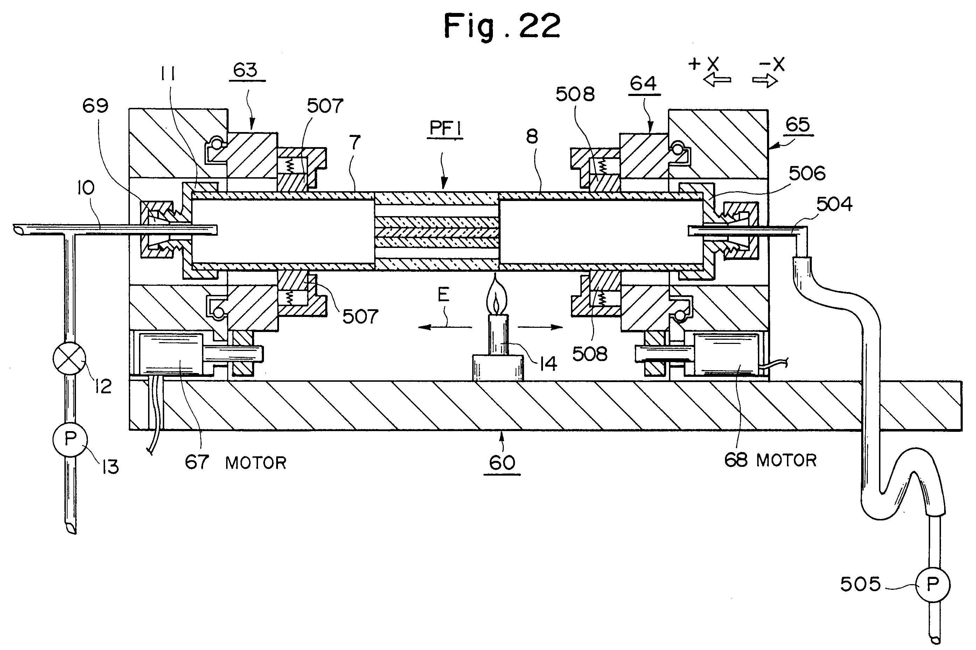

Fig. 21 is a perspective view to illustrate a preform PF1 to which the dummy tubes 7, 8 are attached and a glass lathe EQ2 in which the preform PF1 is set. Fig. 22 is a cross section as cut along the CC line and seen in the direction of arrows in Fig. 21. The glass lathe EQ2 has a bottom plate 60. The bottom plate 60 is cut to provide grooves 61 and 62 extending in the longitudinal direction thereof. The longitudinal direction is defined as the X direction. The glass lathe EQ2 is equipped with a pair of chucks 63, 64 for holding the dummy tubes 7, 8. The dummy tubes 7, 8 are held by holding members 507 and 508 provided in the respective chucks 63, 64.

The chuck 64 is mounted on a side wall 65. Lower portions of the side wall 65 are slidably fit in the grooves 61 so that the side wall 65 may move in the X direction. An oxy-hydrogen burner 14 is slidably fit in the groove 62 so that the oxy-hydrogen burner 14 may move in the X direction. Connected to the oxy-hydrogen burner 14 is a gas tube 66 for supplying oxygen and hydrogen thereto.

The chucks 63, 64 can rotate the preform PF1 held thereby by means of electric motors 67, 68. The chucks 63, 64 rotate the dummy tubes 7, 8 attached to the preform PF1 at a same angular velocity and in a same direction. This is for preventing a twisting stress from being exerted on the preform PF1.

An opening end of one dummy tube 7 is fit in a cap 11 communicating with a gas tube 10. The opening end of dummy tube 7 is in close fit with the cap 11. Since the cap 11 is connected through the dummy tube 7 to the preform PF1, the cap 11 rotates when the preform PF1 is rotated. A seal 69 is interposed between the gas tube 10 and the cap 11 in order to prevent external gas from entering through the connection therebetween. Since the gas tube 10 is slidable relative to the seal 69, the gas tube 10 remains stationary when the preform PF1 is rotated.

The gas tube 10 is bifurcated. One branch of the gas tube 10 is connected through an open/close valve 12 to a vacuum pump 13. The other branch of the gas tube 10 is connected to a Cl₂, O₂, He, O₃ gas supply source (not shown). Gas supply from the gas supply source is controlled by opening or closing valves 501, 502, 503, 601. A flow controller 500 manufactured by TOKYO KEISO SHA is provided between the valves 501, 502, 503, 601 and the gas tube 10. The flow controller 500 controls a flow amount of gas passing therethrough. Side wall 602 is detachable from the bottom plate 60.

Set to the opening end of dummy tube 8 are a cap 506 and a gas tube 504 communicating with an exhaust port of the cap 506 in the same arrangement as on the dummy tube 7 side. The gas tube 504 communicates with an evacuation pump 505 so that gas inside the preform PF1 can be evacuated through the exhaust port.

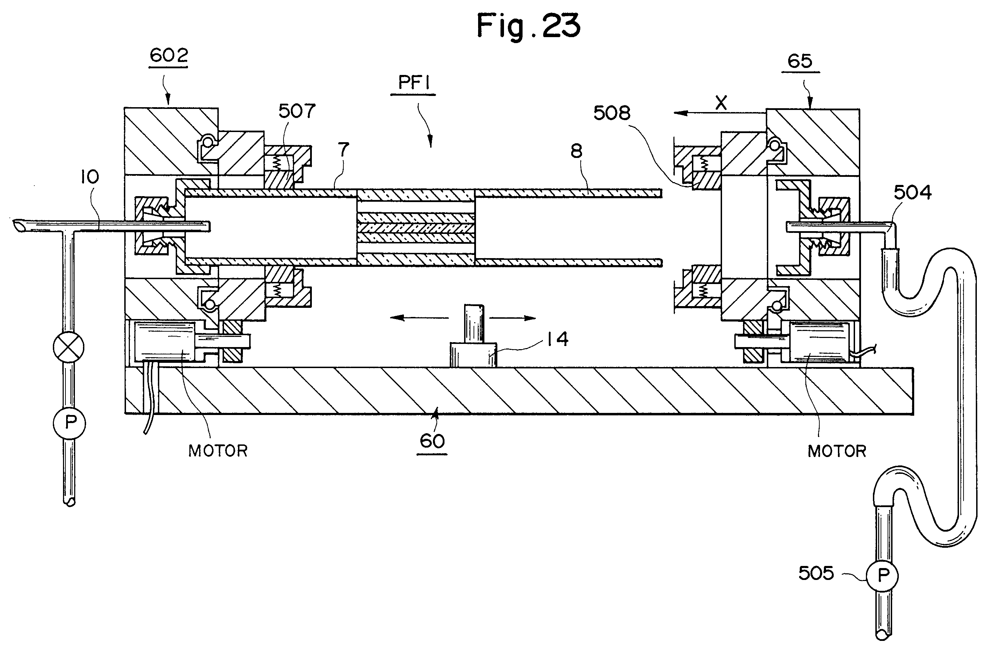

When the preform PF1 with the dummy tubes 7, 8 attached thereto is installed in the glass lathe EQ2 as shown in Fig. 21 and Fig. 22, the dummy tube 7 is held by the chuck 63, as shown in Fig. 23, and thereafter the side wall 65 is slid from right to left in the drawing.

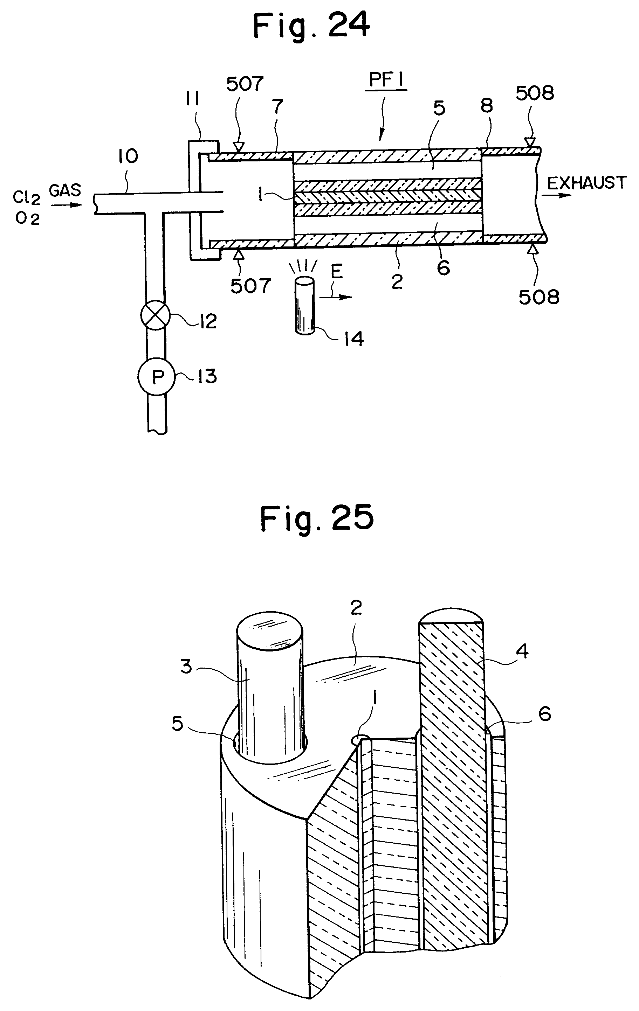

After completion of the apparatus arrangement as described, the interior of through holes 5, 6 is cleaned with gas. In the following description, the glass lathe EQ2 shown in Fig. 21 will be represented by the schematic illustration shown in Fig. 24 for brevity.

After the preform PF1 was set in the glass lathe EQ2 as described above, the preform PF1 is heated to about 1420 °C by the outside oxy-hydrogen burner 14 with supply for example of chlorine at flow rate of 500 cc/min. from the gas supply source into the preform PF1 in this state, achieving removal mainly of inorganic impurities remaining in the preform PF1, and dehydration. The gas flowing into the through holes 5, 6 may be a chlorine-based gas such as carbon tetrachloride (CCl₄), thionyl chloride (SOCl₂) or hydrogen chloride (HCl). The chlorine-based gas has the dehydration effect, which produces chlorine ions when decomposed.

The oxy-hydrogen burner 14 is moved at speed of 35 revolutions per minute in the direction of arrow E in the drawing and the preform PF1 is simultaneously rotated at 35 revolutions per minute.

Further, after stopping the supply of chlorine gas, the preform PF1 is heated to about 1420 °C by the outside oxy-hydrogen burner 14 with supply of oxygen gas at 500 cc/min. from the gas supply source, thereby removing mainly organic impurities remaining in the preform PF1.

During the heating, hydrogen and oxygen are supplied at flow rate of 100 liters/min. and at flow rate of 48 liters/min., respectively, to the oxy-hydrogen burner 14. The heating temperature is the surface temperature of preform PF1 and the heating temperature is measured by a radiation pyrometer (model IDV-1) manufactured by LAND INFRA LIMITED.

At the impurity removing step (S4) the heating temperature of preform PF1 below 1000 °C would result in insufficient impurity removal, while the heating temperature of at least 1500 °C would cause deformation of preform PF1 or especially of the holes 5, 6. Therefore, the heating temperature less than 1500 °C is preferable. More preferably, the heating temperature is in the range of about 1000 to 1500 °C in view of the above point.

Also, the flow rate of chlorine gas or oxygen gas is preferably in the range of about 200 to 1000 cc/min. in respect of the impurity removal. Further, the oxy-hydrogen burner 14 may be moved at speed of 2 to 60 mm/min. in the direction of arrow E.

By this step the inorganic impurities remaining in the preform PF1 can be removed with the chlorine-based gas before using the oxygen gas in the impurity removing process of preform PF1, and after the inorganic impurities were removed with the chlorine-based gas, mainly organic impurities are removed with the oxygen gas as an oxide, whereby the inorganic impurities can be prevented from reacting with the oxygen gas or being stabilized as oxides.

Also, this step employed the impurity removal process in which the chlorine-based gas and the oxygen gas was introduced in the named order into the preform PF1, but the impurity removal process may be done with a mixed gas of a chlorine-based gas and oxygen gas, which shows the same operational effect as in the embodiment and which can shorten the fabrication process time of the preform PF2 for polarization-maintaining optical fiber.

Accordingly, this step uses the oxygen gas in the impurity removing process in fabricating the preform PF2 for polarization-maintaining optical fiber whereby mainly organic impurities remaining in the preform PF1 , which cannot be fully removed by the chlorine-based gas as employed in the conventional methods, can be removed. This results in preventing production of bubbles due to gasification of such organic impurities, achieving great improvements in optical transmission characteristics and in mechanical strength.

### Fifth Step

At the fifth step (S5) shown in Fig. 3, the stress-applying members are inserted into the through holes 5, 6.

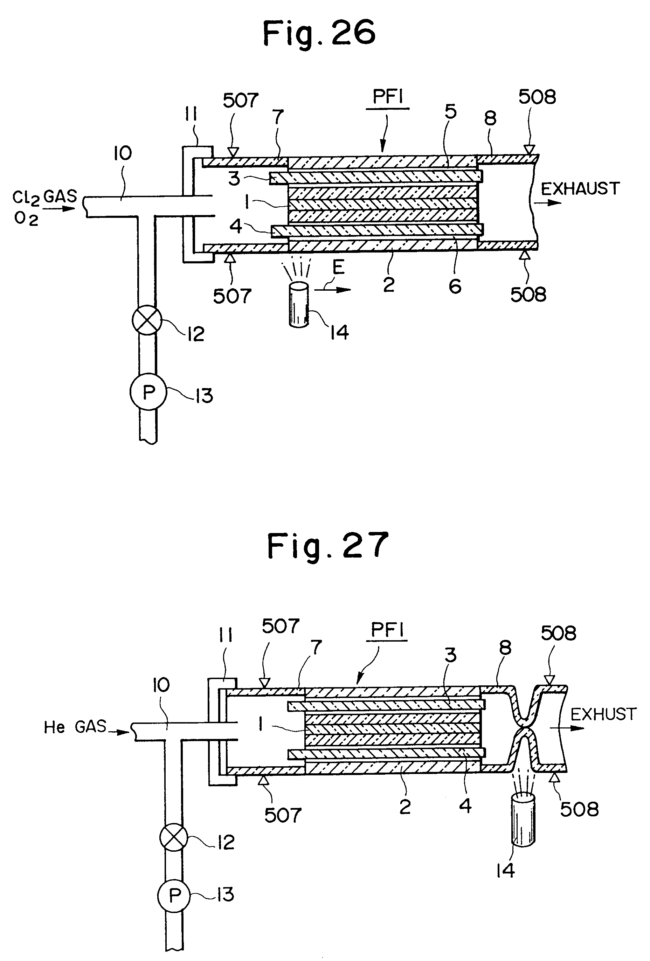

After cooling the preform PF1, the cylindrical stress-applying members 3, 4 made of B₂O₃-doped quartz glass and having the diameter of 10.3 mm are inserted into the through holes 5, 6 and fixed therein, as shown in Fig. 25. Fig. 26 shows a state in which the preform PF1 with the stress-applying members is set in the apparatus EQ2 of Fig. 24.

### Sixth Step

At the sixth step (S6) shown in Fig. 3, the inside of through holes 5, 6 and the stress-applying members 3, 4 are cleaned with gas in the state where the stress-applying members are inserted in the through holes 5, 6.

With the apparatus of Fig. 24 the preform PF1 is again heated to about 1050 °C by the outside oxy-hydrogen burner 14 while the chlorine gas is supplied at flow rate of 500 cc/min. from the gas supply source into the preform PF1, thereby effecting removal mainly of inorganic impurities remaining in the through holes 5, 6 in preform PF1 and the stress-applying members 3, 4, and dehydration.

After stopping the supply of chlorine gas, the preform PF1 is further heated to about 1050 °C by the outside oxy-hydrogen burner 14 while the oxygen gas is supplied at flow rate of 500 cc/min. from the gas supply source, thereby effecting removal mainly of organic impurities remaining in the preform PF1 and the stress-applying members 3, 4. The oxy-hydrogen burner 14 is moved at speed of 35 mm/min. in the direction of arrow E in Fig. 26 and the preform PF1 is not rotated.

During the heating the flow rate of hydrogen supplied to the oxy-hydrogen burner 14 is 100 liters/min. and the flow rate of oxygen 15 liters/min. The heating temperature is the surface temperature of preform PF1 and the heating temperature is measured using the radiation pyrometer (model IDV-1) manufactured by LAND INFRA LIMITED.

At the impurity removing step (S6) the heating temperature of preform PF1 below 1000 °C would result in insufficient impurity removal, while the heating temperature of at least 1200 °C would cause deformation of preform PF1, especially of holes 5, 6, or cracks upon incorporation of the stress-applying members 3, 4 with the core/cladding preform. Therefore, the heating temperature less than 1200 °C is preferable. More preferably, the heating temperature is in the range of about 1000 to 1200 °C in view of the above point.

Also, the flow rate of chlorine gas and oxygen gas is preferably in the range of about 200 to 1000 cc/min. in respect of the impurity removal. Further, the oxy-hydrogen burner 14 may be moved at speed of 2 to 60 mm/min. in the direction of arrow E.

This step has the same operational effect as the fourth step (S4). The heating temperature was set to 1050 °C in this step. This is because the melting point of the stress-applying members 3, 4 is lower than that of the cladding 2.

### Seventh Step

At the seventh step (S7) shown in Fig. 3, helium gas is introduced into the through holes 5, 6.

As shown in Fig. 27, helium gas (He) is supplied through the gas tube 10 into the dummy tube 7 while keeping the open/close valve 12 closed and is exhausted from the dummy tube 8 side by the evacuation pump 505 in Fig. 22. The outside of preform PF1 is heated by the oxy-hydrogen (H₂/O₂) burner 14 in this state. In the present embodiment the helium gas is supplied at flow rate of 500 cc/min. The flow rate of helium gas is preferably in the range of about 200 to 1000 cc/min. Also, this step may employ other rare gas than the helium gas.

### Eighth Step

At the eighth step (S8) shown in Fig. 3, the pressure inside the through holes 5, 6 is reduced and the dummy tubes 7, 8 are fusion-spliced to keep the inside of through holes 5, 6 in a hermetic seal.

When the helium gas replaces the air in the dummy tubes 7, 8 and the through holes 5, 6 to fill the room therein, one side of the dummy tube 8 is heated to melt and to be united, thereby closing the open end of dummy tube 8. At the same time, the open/close valve 12 is opened as supplying the helium gas.

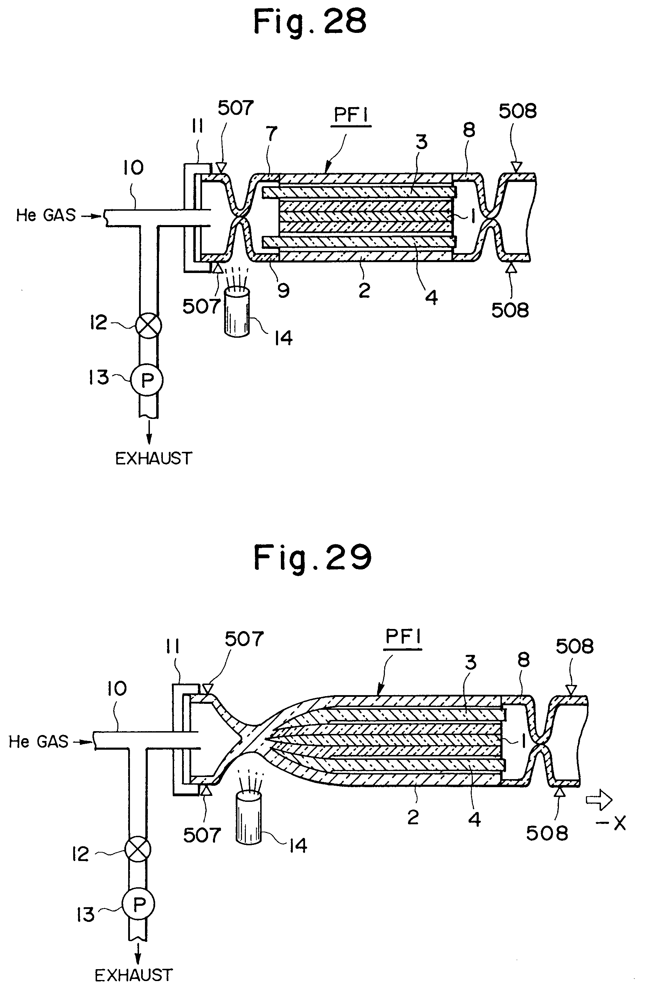

Then evacuation is continued through the open/close valve 12 by the vacuum pump 13 while supplying the helium gas, as shown in Fig. 28, so that the helium gas filling the dummy tubes 7, 8 and the through holes 5, 6 is fully evacuated so as to make the inside of preform PF1 in a reduced-pressure state.

In the present embodiment the pressure in the preform PF1 is reduced to about 10 torr and thereafter one side of dummy tube 7 is heated to melt and to be united, thereby closing the open end of dummy tube 7 in a hermetic seal. Next, the supply of helium gas is stopped and the evacuation by the vacuum pump 13 is also stopped. Here, the pressure may be further reduced lower than 10 torr to obtain a sufficient vacuum state (for example 5 torr). In the respect of effective exhaust, it is preferable that preform PF1 is heated by the heater such as burner 14, while the pressure in the through holes 5, 6 is reduced.

Next, heating one end of dummy tube 7, as shown in Fig. 29, the side wall 65 shown in Fig. 22 is moved in the direction of arrow -X to separate the preform PF1 from the cap 11 and to obtain a preform PF2 for polarization-maintaining optical fiber in the reduced-pressure state inside.

Even if a perfect vacuum state were not obtained in this step and the fiber drawing must be conducted with a small amount of helium gas remaining, high-temperature heating of preform PF2 during the fiber drawing forces the helium gas to dissolve and diffuse in the cladding 2 so as to be discharged from the cladding 2 to the outside or to be kept in the cladding 2 as dissolved, whereby bubbles can be effectively prevented from being produced.

### Ninth Step

At the ninth step (S9) shown in Fig. 3, the preform PF2 for polarization-maintaining optical fiber as obtained at the eighth step is subjected to fiber drawing to form a polarization-maintaining optical fiber PF3.

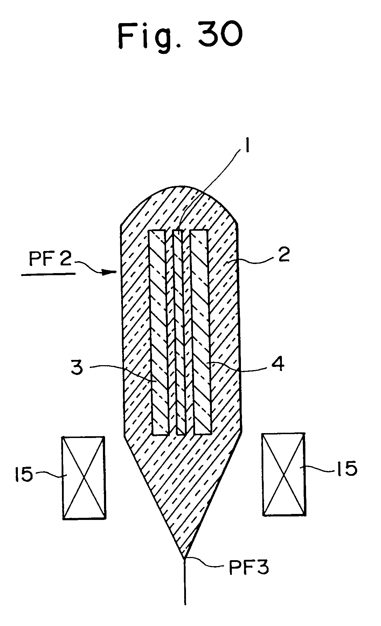

First, the polarization-maintaining optical fiber preform PF2 is removed from the glass lathe EQ2 with the both ends being kept in a hermetic seal. The polarization-maintaining optical fiber preform PF2 is set in a drawing furnace 15, as shown in Fig. 30. One end portion of the polarization-maintaining optical fiber preform PF2 is heated to about 2060 °C by the drawing furnace 15 so as to be fused. Keeping the preform in the fused state, the drawing is continued with a drawing tension of about 18 g and at drawing speed of 100 m/min. The temperature measurement is made by measuring the temperature of a maximum temperature portion in the furnace core of the drawing furnace 15 with an electro-optical pyrometer (model IR-U) manufactured by CHINO SEISAKUSHO SHA.

With the fiber drawing as shown in Fig. 30, because the thermal expansion coefficient of stress-applying members 3, 4 is larger than that of the cladding 2, the stress-applying members 3, 4 is contracted more than the cladding 2 as cooled, whereby predetermined stresses are forced on the core 1. Conditions for the fiber drawing are as follows: the temperature 1800 to 2100 °C; the drawing tension 10 to 50 g; the drawing speed about 50 to 300 m/min.

According to the above first to ninth steps (S1 to S9), a single-mode polarization-maintaining optical fiber PF3 of outer diameter 125 µm as shown in Fig. 2 can be obtained with length of at least 10 km.

### Pre-treatment step for stress-applying members

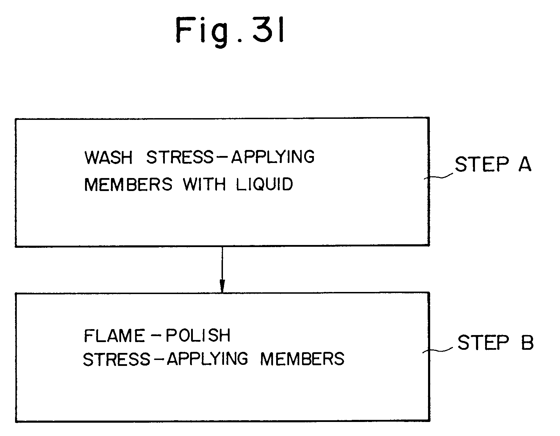

The stress-applying members 3, 4 to be inserted into the holes at above step 5 are treated according to the flowchart shown in Fig. 31.

### Step A

At step A (S(A)) shown in Fig. 31, the stress-applying members 3, 4 are cleaned with liquid. This step is the same as the liquid cleaning step for preform PF1 as described at the second step shown in Fig. 3.

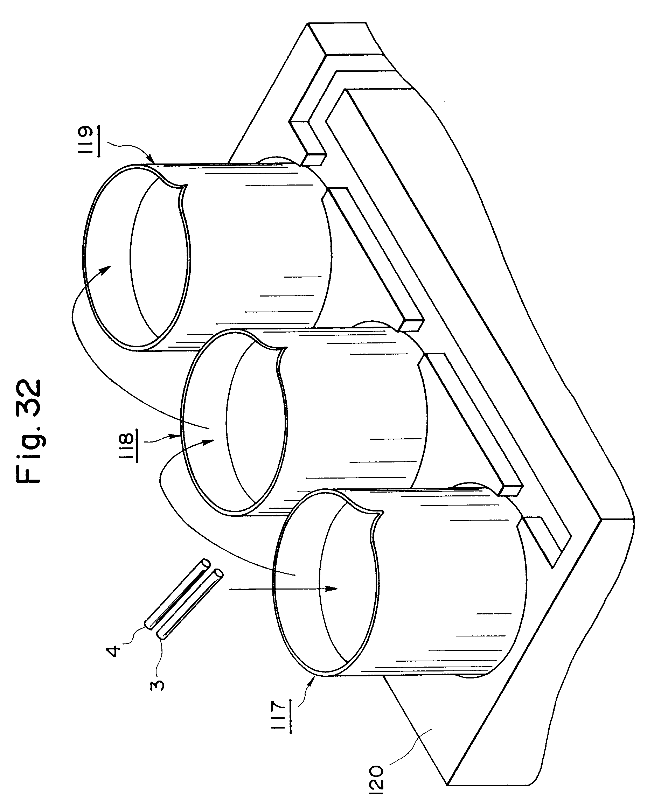

Three vessels 117, 118, 119 are first prepared as shown in Fig. 32. The first vessel 117 is filled with 5 % aqua regia (mixture of hydrochloric acid and nitric acid). The second vessel 118 is filled with ethyl alcohol. The third vessel 119 is filled with a 5 % HF (hydrofluoric acid) solution. These vessels 117, 118, 119 are set on an ultrasonic cleaner 120. Grooves are made on the ultrasonic cleaner 120, and the vessels 117, 118, 119 are set in the grooves.

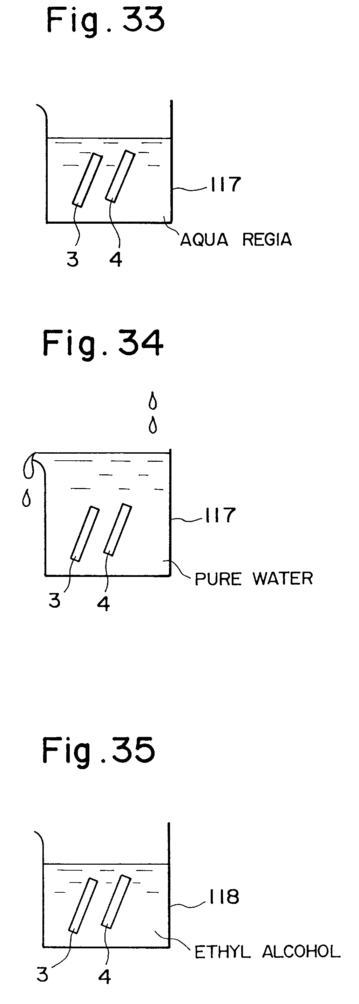

Ultrasonic cleaning is continued for one hour while the stress-applying members 3, 4 are soaked in the vessel 117 as shown in Fig. 33. Since the vessel 117 contains the aqua regia, metal impurities present on the surfaces of stress-applying members 3, 4 are removed. As shown in Fig. 34, pure water is poured into the vessel 117 to rinse the stress-applying members 3, 4 therewith. On this occasion the ultrasonic cleaner 120 may be operated to effect ultrasonic cleaning to rinse the stress-applying members 3, 4. Liquid overflowing out of the vessel 117 flows in the grooves on the ultrasonic cleaner 120 to be discharged to the outside.

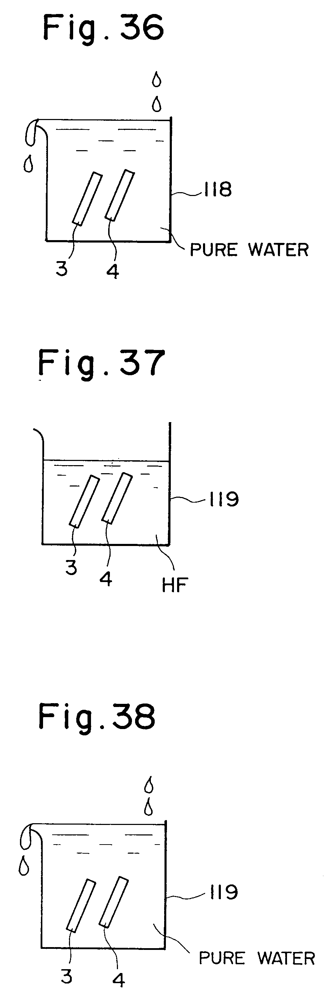

After that, the stress-applying members 3, 4 are taken out of the vessel 117, and ultrasonic cleaning is performed for one hour while the stress-applying members 3, 4 are soaked in the vessel 118 as shown in Fig. 35. Since the vessel 118 contains ethyl alcohol, organic impurities present on the surfaces of stress-applying members 3, 4 are removed. As shown in Fig. 36, pure water is poured into the vessel 118 to rinse the stress-applying members 3, 4 therewith. On this occasion the ultrasonic cleaner 120 may be operated to perform ultrasonic cleaning to rinse the stress-applying members 3, 4. Liquid overflowing out of the vessel 118 flows in the grooves on the ultrasonic cleaner 120 to be discharged to the outside.

Further, stress-applying members 3, 4 are taken out of the vessel 118 and ultrasonic cleaning is conducted for one hour while the stress-applying members 3, 4 are soaked in the vessel 119 as shown in Fig. 37. Since the vessel 119 contains the HF solution, undesired impurities present on the surfaces of stress-applying members 3, 4 are removed. The removal of the impurities is effected by the corrosive action of hydrofluoric acid against Sao₂, which slightly etches the surfaces of stress-applying members 3, 4. As shown in Fig. 38, pure water is poured into the vessel 119 to rinse the stress-applying members 3, 4 therewith. On this occasion the ultrasonic cleaner 120 may be operated to conduct ultrasonic cleaning to rinse the stress-applying members 3, 4. Liquid overflowing out of the vessel 119 flows in the grooves on the ultrasonic cleaner 120 to be discharged to the outside.

After that, the stress-applying members 3, 4 are taken out of the vessel 119 and dried in an unrepresented clean bench.

### Step B

At step B (S(B)), the surfaces of stress-applying members 3, 4 are flame-polished.

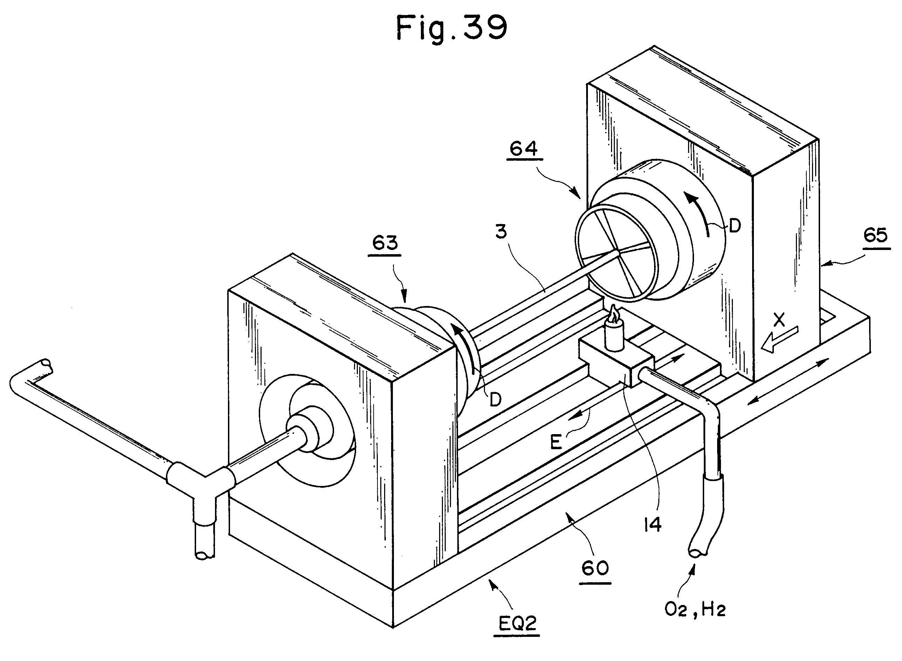

Fig. 39 is a perspective view to show a glass lathe EQ2 for flame-polishing the surfaces of stress-applying members 3, 4 and the stress-applying member 3 (4) set in the glass lathe EQ2. This apparatus EQ2 is the same as the apparatus EQ2 as shown in Fig. 21.

The stress-applying member 3 is held by chucks 63, 64. The chucks 63, 64 are rotated at a same angular velocity in the direction of arrow D to rotate the stress-applying member 3 (4). This is for avoiding a twisting stress exerted on the stress-applying member 3. The stress-applying member 3 (4) is heated to 1020 °C by an oxy-hydrogen burner 14. The temperature measured in the above condition is defined by measuring the surface temperature of stress-applying member 3 (4) with the radiation pyrometer (model IVD-1) manufactured by LAND INFRA LIMITED. The oxy-hydrogen burner 14 is moved at speed of 40 mm/min. in the direction of arrow E in the drawing, while the stress-applying member 3 is simultaneously rotated at 35 revolutions per minute. During the heating a flow rate of hydrogen supplied to the oxy-hydrogen burner 14 is 60 liters/min. and a flow rate of oxygen is 20 liters/min.

Since the stress-applying member 3 is rotated with the movement of oxy-hydrogen burner 14 in the direction of arrow E, the coarse surface of stress-applying member 3 (4) is fused. Accordingly, the surface of stress-applying member 3 is totally uniformly fused to be flame-polished. The stress-applying member 4 is also subjected to the same flame-polishing treatment as the stress-applying member 3.

After the liquid cleaning using the hydrofluoric acid at the step A (S(A)) removed most of fine crack grooves present on the surfaces of stress-applying members 3, 4, the flame-polishing step (S(B)) enlarges the opening portions of crack grooves, which can greatly reduce voids remaining at the deep ends of crack grooves in the stress-applying members 3, 4, as could appear when only the openings of crack grooves are fused to stick.

The steps (S1-S9, S(A), S(B)) will be described in more detail.

### Characteristics of polarization-maintaining optical fiber fabricated according to the above steps

A polarization-maintaining optical fiber PF3 with outer diameter of 125 µm as shown in Fig. 2 was obtained according to steps A, B (S(A), S(B)) and the first to ninth steps (S1-S9). The length of the polarization-maintaining optical fiber was 12 km. Characteristics of the thus obtained fiber were examined. Cross talk at 12 km was -20 dB and a transmission loss was 1.4 dB/km. The cross talk was measured with a cross talk measuring apparatus such that linearly polarized light was made incident into one end in alignment with the fiber polarization axis and a quantity of light outgoing from the other end was measured in the direction perpendicular to the incident axis. Also, the transmission loss was measured with a transmission loss measuring apparatus measuring a quantity of incident light into the fiber and a quantity of outgoing light after transmission through the fiber.

Further, the 12-km fiber was cut into 1-km pieces. Cross talk for each piece was measured. The cross talk of the cut fibers was not more than -30 dB. Here let us define "cross talk yield" as a ratio of sum length of 1-km standard fibers with cross talk of not more than -30 dB to the total length of the obtained fiber; "loss yield" as a ratio of 1-km standard fibers with loss of not more than 2.0 dB to the total length of the obtained fiber; and "non-defective yield" as a ratio of 1-km standard fibers with cross talk of not more than -30 dB and with loss of not more than 2.0 dB to the total length of the obtained fiber. Then, "cross talk yield", "loss yield" and "non-defective yield" of the polarization-maintaining optical fiber as obtained by the above fabrication process all were 100 %.

At the fourth and sixth steps (S4, S6) the chlorine gas and oxygen gas was used for cleaning. Experiments were conducted for examining the effect to use both the chlorine gas and the oxygen gas.

First, an 11-km polarization-maintaining optical fiber PF3 was fabricated by the same steps as those described above except that only the chlorine gas was used at the steps (S4, S6) and that the seventh step (S7) was excluded. Characteristics of the thus obtained polarization-maintaining optical fiber were evaluated. Cross talk for the entire length of 11 km was -7 dB and a transmission loss was 1.3 dB/km. Further, the 11-km fiber was cut into 1-km pieces to produce eleven rods. Cross talk for each rod was measured. Seven rod fibers out of the eleven rods showed excellent values of cross talk of not more than -30 dB. However, the remaining four rods showed cross talk of at least -15 dB. The cross talk yield was 63.6 %, the loss yield was 100 % and the non-defective yield was 63.6 %.

Next, a 13-km polarization-maintaining optical fiber PF3 was fabricated by the same steps as those described above except that only the oxygen gas was used at the steps (S4, S6) and that the seventh step (S7) was excluded. Characteristics of the thus obtained polarization-maintaining optical fiber were evaluated. Cross talk for the entire length of 13 km was -6 dB. Transmission loss for the entire length of 13 km was 3.8 dB/km. Further, the 13-km fiber was cut into 1-km pieces to produce thirteen rods. Cross talk for each rod was measured. Eight rod fibers out of the thirteen rods showed excellent values of cross talk of not more than -30 dB. However, the remaining five rods showed cross talk of at least -15 dB. The cross talk yield was 61.5 %, the loss yield was 0 % and the non-defective yield was 0 %. It is assumed that the reason for this result is that water was not fully removed because the chlorine gas was not used in the impurity removing process.

### Optimization of first step

At the above-described first step (S1) the through holes 5, 6 were bored into the preform PF and the inner surfaces in the through holes 5, 6 were polished up to the maximum roughness of about 0.5 µm (see Fig. 4 and Fig. 5). Next described is the maximum roughness of the inner surfaces in the through holes 5, 6.

The roughness was changed with variety for the inner wall surfaces in the through holes 5, 6 as obtained by this step.

Polarization-maintaining optical fiber were fabricated using the first step (S1) for forming the through holes 5, 6, the third to ninth steps (S3-S9) without the second step, and steps A, B (S(A), S(B)).

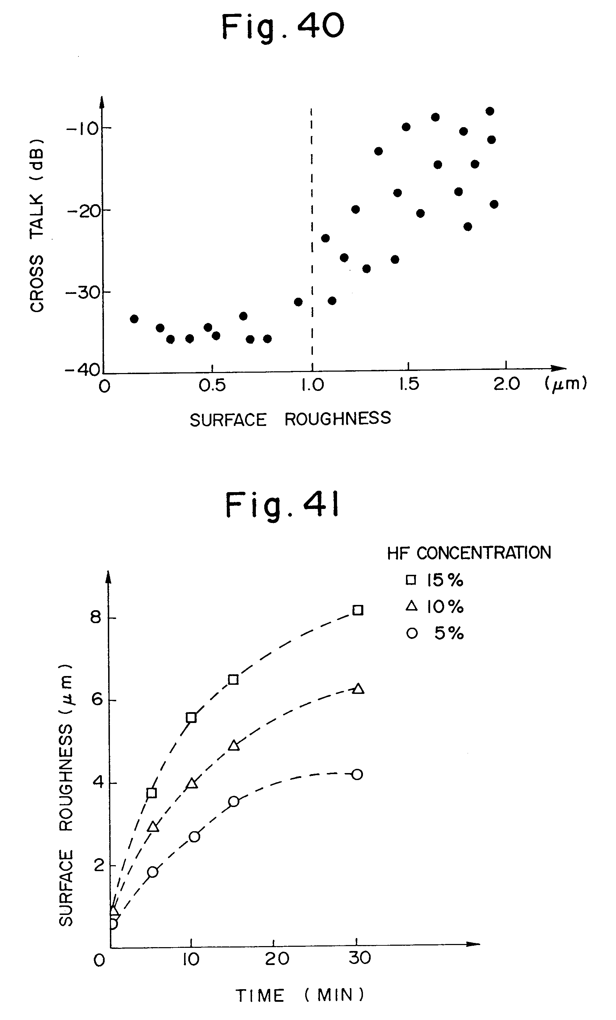

Fig. 40 is a graph to show plots of cross talk (dB) of the thus obtained 1-km polarization-maintaining optical fibers against the roughness (µm) of the inner wall surfaces in the through holes 5, 6 obtained at the first step. It is seen from this graph that the cross talk can be greatly reduced in case of the roughness (µm) of the inner wall surfaces in the through holes 5, 6 being 0 to 1 µm, as compared with cases where the roughness of inner wall surfaces (µm) exceeds 1 µm.

The roughness of inner wall surfaces was measured using a surface roughness meter (model SURFTEST 402) manufactured by MITSUTOYO SHA.

### Optimization of second step

At the above-described second step (S2) the inner walls in the through holes 5, 6 in the preform PF1 were cleaned with liquid. At this step the preform PF1 was cleaned in the hydrofluoric acid solution. Below described are the concentration of hydrofluoric acid solution used in the cleaning and the cleaning time.

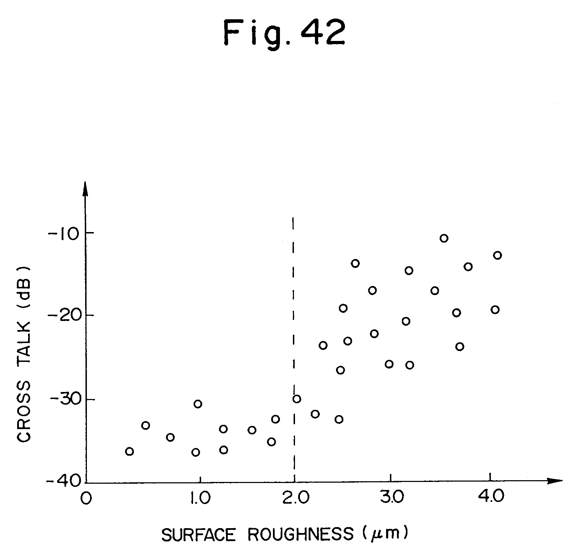

Preforms PF1 used had the roughness of inner wall surfaces in the through holes 5, 6 being 0.5 µm. The preforms PF1 were cleaned in different concentrations of hydrofluoric acid in the manner as shown in Fig. 12 and Fig. 13. Fig. 41 is a graph to show dependence of roughness (µm) of the inner wall surfaces in the through holes 5, 6 as so cleaned, on the cleaning time (min.) and on the concentration (%) of hydrofluoric acid used in cleaning. As seen from this graph, the higher the concentration of hydrofluoric acid, the shorter the cleaning time to obtain a same surface roughness. In case of a higher concentration of hydrofluoric acid solution being used, the inner wall surfaces are cleaned within a short time, but control of roughness becomes difficult. From the practical ground for fabrication considering these facts, the concentration of HF solution is preferably higher than 0 % but not more than 10 %.

Polarization-maintaining optical fibers were fabricated performing such cleaning at the second step (S2) and using the above first step (S1), the third to ninth steps (S3-S9) and steps A, B (S(A), S(B)).

Fig. 42 is a graph to show plots of cross talk (dB) of the thus obtained 1-km polarization-maintaining optical fibers against the roughness (µm) of the inner wall surfaces in the through holes 5, 6 obtained at the second step.

As apparent from the results of this experiment, cross talk in case of the roughness of inner wall surfaces in the through holes 5, 6 by the cleaning (liquid phase etching) being not more than about 2.0 µm is far reduced as compared with that in case of the roughness of inner wall surfaces in the through holes 5, 6 being not less than about 2.0 µm. Accordingly, the roughness of inner wall surfaces in the through holes 5, 6 is preferably to be determined in the range of 0 to 2.0 µm. Also, in order to keep the roughness of inner wall surfaces in the through holes 5, 6 within the range of 0 to 2.0 µm, the concentration of HF solution is preferably higher than 0 % but not more than 10 %.

### Second Embodiment

The effect by the liquid cleaning at the second step (S2) will be next examined.

A polarization-maintaining optical fiber PF3 shown in Fig. 2 was fabricated using the aqua regia (mixture of hydrochloric acid and nitric acid) and ethyl alcohol but not using the hydrofluoric acid solution at the second step (S2) (this process will be referred to as step 2a).

Namely, the stress-applying members 3, 4 were cleaned using the steps A, B (S(A), S(B)) and the preform PF of Fig. 1 was processed using the first step (S1), the step 2a and the third to ninth steps (S3-S9).

Characteristics of the thus obtained polarization-maintaining optical fiber were evaluated. Cross talk at the full length of 12 km was -5.5 dB and a loss was 1.5 dB/km. Further, the 12-km fiber was cut into 1-km pieces to obtain twelve rods. Cross talk for each rod was measured. Out of the twelve rods, five rod fibers showed excellent values of cross talk of not more than -30 dB. However, the remaining seven rods showed cross talk of at least -15 dB. The cross talk yield was 41.7 %, the loss yield was 100 % and the non-defective yield was 41.7 %.

### Third Embodiment

The effect by the liquid cleaning at the second step will be next examined.

A polarization-maintaining optical fiber PF3 shown in Fig. 2 was fabricated not using the aqua regia (mixture of hydrochloric acid and nitric acid) and ethyl alcohol but only using the hydrofluoric acid solution at the second step (S2) (this process will be referred to as step 2b).

Namely, the stress-applying members 3, 4 were cleaned using the steps A, B (S(A), S(B)) and the preform PF of Fig. 1 was processed using the first step (S1), the step 2b and the third to ninth steps (S3-S9).

Characteristics of the thus obtained polarization-maintaining optical fiber were evaluated. Cross talk at the full length of 11 km was - 6 dB and a loss was 1.5 dB/km. Further, the 11-km fiber was cut into 1-km pieces to obtain eleven rods. Cross talk for each rod was measured. Out of the eleven rods, eight rod fibers showed excellent values of cross talk of not more than -30 dB. However, the remaining three rods showed cross talk of at least -15 dB. The cross talk yield was 72.7 %, the loss yield was 100 % and the non-defective yield was 72.7 %.

### Fourth Embodiment

A polarization-maintaining optical fiber PF3 was fabricated without using the third step (S3) in the above third embodiment. Characteristics of the thus obtained polarization-maintaining optical fiber were evaluated. Cross talk at the full length of 12 km was - 8 dB and a loss was 1.0 dB/km. Further, the 12-km fiber was cut into 1-km pieces to obtain twelve rods. Cross talk for each rod was measured. Out of the twelve rods, eight rod fibers showed excellent values of cross talk of not more than -30 dB. However, the remaining four rods showed cross talk of at least -15 dB. The cross talk yield was 66.7 %, the loss yield was 100 % and the non-defective yield was 66.7 %.

Accordingly, it was verified that the characteristics of polarization-maintaining optical fiber PF3 could be greatly improved by combining step 2b with step 3.

### Fifth Embodiment

The effect by the gas cleaning at the sixth step (S6) will be examined.

A polarization-maintaining optical fiber PF3 shown in Fig. 2 was fabricated without performing the sixth step (gas cleaning step) in Fig. 3. Namely, the stress-applying members 3, 4 were cleaned using the steps A, B (S(A), S(B)) and the preform PF of Fig. 1 was processed using the first to fifth steps (S1-S5) and the seventh to ninth steps (S7-S9).

Characteristics of the thus obtained polarization-maintaining optical fiber were evaluated. Cross talk at the full length of 11 km was - 10.6 dB and a loss was 1.9 dB/km. Further, the 11-km fiber was cut into 1-km pieces to obtain eleven rods. Cross talk for each rod was measured. Out of the eleven rods, nine rod fibers showed excellent values of cross talk of not more than -30 dB. However, the remaining rods showed cross talk of at least -15 dB. The cross talk yield was 81.8 %, the loss yield was 45.5 % and the non-defective yield was 45.5 %.

### Sixth Embodiment

The effect by introduction of helium gas at the seventh step (S7) will be examined.

A polarization-maintaining optical fiber PF3 shown in Fig. 2 was fabricated without performing the seventh step (introducing step of helium gas) in Fig. 3. Namely, the stress-applying members 3, 4 were cleaned using the steps A, B (S(A), S(B)) and the preform PF of Fig. 1 was processed using the first to sixth steps (S1-S6) and the eighth and ninth steps (S8 and S9).

The thus produced polarization-maintaining optical fiber was evaluated. In first embodiment, occurrence frequency of bubbles was about 0.001 bubble/km. In contrast, a polarization-maintaining optical fiber produced by this embodiment has occurrence frequency of bubbles of about 1 bubbles/km. A polarization-maintaining optical fiber produced by conventional method described in Japanese Laid-open Patent Application No.62-12625 has occurrence frequency of bubbles of about 5 bubbles/km.
Thus, a great improvement was obtained by using He gas according to the invention. And other steps according to the invention are effective for fabricating an polarization-maintaining optical fiber having a excellent characteristics. It was thus verified that the invention could provide a single-mode polarization-maintaining optical fiber excellent in mechanical strength and in optical transmission characteristics.

Characteristics of the thus obtained polarization-maintaining optical fiber were evaluated. Cross talk at the full length of 10 km was - 10 dB and a loss was 1.6 dB/km. Further, the 10-km fiber was cut into 1-km pieces to obtain ten rods. Cross talk for each rod was measured. Out of the ten rods, eight rod fibers showed excellent values of cross talk of not more than -30 dB. However, the remaining two rods showed cross talk of at least -15 dB. The cross talk yield was 80 %, the loss yield was 100 % and the non-defective yield was 80 %.

### Seventh Embodiment

A polarization-maintaining optical fiber PF3 shown in Fig. 2 was fabricated without performing the above third step (S3), seventh step (S7) and step B (S(B)). Namely, the stress-applying members 3, 4 were cleaned using only step A (S(A)) and the preform PF of Fig. 1 was processed using the first step (S1), the second step (S2), the fourth step (S4), the fifth step (S5), the sixth step (S6), the eighth step (S8), and the ninth step (S9).

Characteristics of the thus obtained polarization-maintaining optical fiber were evaluated. Cross talk at the full length of 12 km was -9 dB and a loss was 0.8 dB/km. Further, the 12-km fiber was cut into 1-km pieces to obtain twelve rods. Cross talk for each rod was measured. Out of the twelve rods, nine rod fibers showed excellent values of cross talk of not more than -30 dB. However, the remaining three rods showed cross talk of at least -15 dB. The cross talk yield was 75 %, the loss yield was 100 % and the non-defective yield was 75 %.

### Eighth Embodiment

At the above third step (S3), as described with Fig. 15 to Fig. 17, the preform PF1 was heated using the oxy-hydrogen burner 116, but the preform may be heated using high-frequency waves.

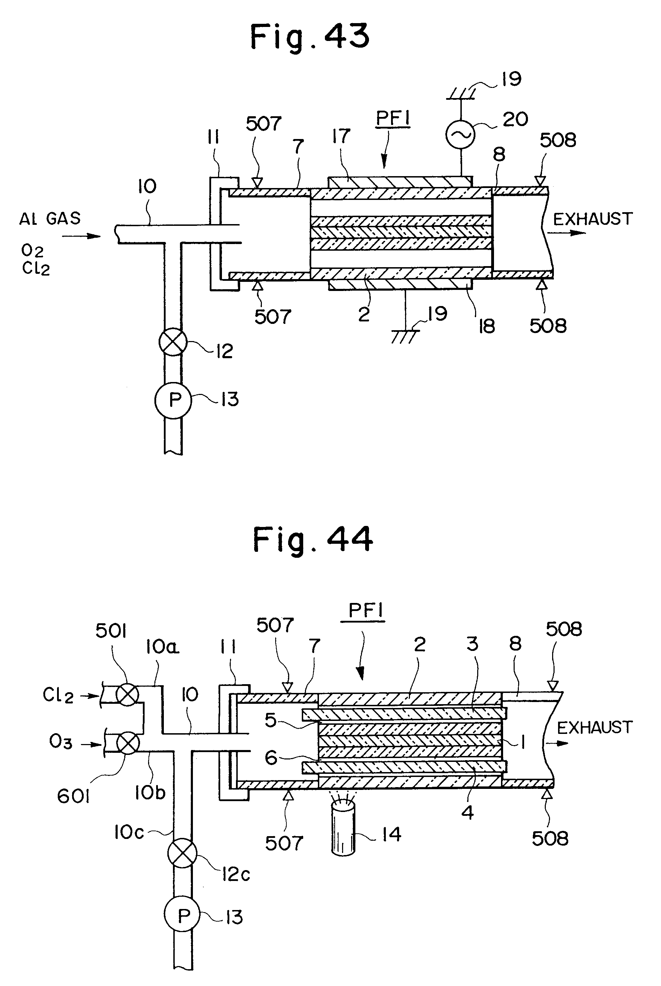

Annular dummy tubes 7, 8 made of quartz glass are attached in a close fit to one and the other ends of the cladding 2, as shown in Fig. 20. The dummy tubes 7, 8 are fixed on chucks 63, 64 as shown in Fig. 21, whereby the preform PF1 is set in the glass lathe EQ2. Quarter-cylinder high-frequency electrodes 17, 18 extending in the longitudinal direction of preform PF1 are attached in fit onto the upper surface and the lower surface of periphery, respectively, of preform PF1, as shown in the partial cross section of Fig. 43. The high-frequency electrode 18 is connected to the earth 19 and the high-frequency electrode 17 is connected through a high-frequency power source 20 to the earth 19.

After completion of such apparatus arrangement, the valve 12 is opened to evacuate inside of preform PF1 by the vacuum pump 13. Next, argon gas is supplied from the gas supply source into the preform in this state. A flow rate of argon gas is in the range of 50 to 200 cc/min. Then the inside of preform PF1 is adjusted into a predetermined reduced-pressure state, for example at about 5 torr, and thereafter high-frequency power (frequency of 13.56 MHz) is supplied from the high-frequency power source 20 to the high-frequency electrodes 17, 18 to produce argon plasma inside the preform PF1. This plasma heats the inner surfaces in the through holes 5, 6 whereby only the inner surfaces are fused to be smoothed. In the present embodiment the argon gas may be replaced by another rare gas such as helium gas.

Characteristics of the thus obtained polarization-maintaining optical fiber were evaluated. Cross talk at the full length of 12 km was - 32 dB and a loss was 1.1 dB/km. Further, the 12-km fiber was cut into 1-km pieces to obtain twelve rods. Cross talk for each rod was measured. Out of the twelve rods, twelve rod fibers showed excellent values of cross talk of not more than -30 dB. The cross talk yield was 100 %, the loss yield was 100 % and the non-defective yield was 100 %.

The present embodiment can also prevent production of bubbles due to the surface roughness of the inner surfaces in the through holes 5, 6 and can achieve improvements in optical transmission characteristics and in mechanical strength of polarization-maintaining optical fiber PF3. Also, in the present embodiment the plasma was produced by applying high-frequency waves to the preform PF1, but the plasma may be produced by irradiating the preform PF1 with electromagnetic waves.

The polarization-maintaining optical fiber fabricated in the above eight embodiment according to present invention have more better characteristics than the fiber described in the Japanese Laid-Open Application Patent No. 1-153551.

### Ninth Embodiment

At the above fourth step (S4), as described with Fig. 21 to Fig. 24, the preform PF1 was heated using the oxy-hydrogen burner 14 to clean the inside of the through holes 5, 6, but the preform may be heated using high-frequency waves.

With the apparatus shown in Fig. 43 the valve 12 is first opened to evacuate the inside of preform PF1 by the vacuum pump 13. For example, chlorine gas is supplied at flow rate of 500 cc/min. from an unrepresented gas supply into the preform PF1. After the inside of preform PF1 reaches a predetermined reduced-pressure state, for example about 5 torr, high-frequency power (frequency of 13.56 MHz) is supplied from the high-frequency power source 20 to the high-frequency electrode 17, 18 to change the chlorine gas into plasma inside the preform PF1. This activates the chlorine gas. The plasma heats the preform PF1 to about 1420 °C, so that mainly inorganic impurities remaining in the preform PF1 are removed and the dehydration is effected. During the heating the preform PF1 is rotated at 35 revolutions per minute. The gas flowing into the through holes 5, 6 may be replaced by another chlorine-based gas such as carbon tetrachloride.

After stopping the supply of chlorine gas, while oxygen gas is supplied at flow rate of 500 cc/min. from the gas supply source, the inside of preform PF1 is adjusted to a predetermined reduced-pressure state, for example to about 5 torr. Then high-frequency power (frequency 13.56 MHz) is supplied from the high-frequency power source 20 to the high-frequency electrodes 17, 18 to change the oxygen gas inside the preform PF1 into plasma thereof. This activates the oxygen gas. The preform PF1 is heated to about 1420 °C, so that mainly organic impurities remaining in the preform PF1 are removed. The heating temperature is the surface temperature of preform PF1, and measurement of the heating temperature is conducted using the radiation pyrometer (model IDV-1) manufactured by LAND INFRA LIMITED.

### Tenth Embodiment

At the above sixth step (S6), as described with Fig. 26, the preform PF1 was cleaned inside the through holes 5, 6 with chlorine gas and oxygen gas, but the preform PF1 may be cleaned using chlorine gas and ozone gas (O₃).

After completion of the fifth step, the chlorine gas and ozone gas is supplied into the apparatus EQ2 as shown in Fig. 21. The pipe is so arranged as to selectively supply the chlorine gas (Cl₂) through a first open/close valve 501 from the first branch 10a of gas tube 10 and the ozone gas (O₃) through a second open/close valve 601 from the second branch 10b.

After completion of such apparatus arrangement, as shown in the partial cross section of Fig. 44, only the first open/close valve 501 is opened to supply the chlorine gas through the pipe 10 at 500 cc/min. to one end of preform PF1 and at the same time the evacuation pump evacuates the inside from the dummy tube 8 side. Maintaining this state, the outer wall of preform PF1 is heated to about 1000 °C by the oxy-hydrogen burner 14, so as to evacuate impurities in the dummy tubes 7, 8 and the holes 5, 6 together with the chlorine gas. Namely, supplying the chlorine gas, the chlorine gas chemically reacts with inorganic impurities such as metals to be exhausted, thus cleaning the inorganic impurities.

In the apparatus arrangement of Fig. 44, the first open/close valve 501 is then closed to stop the supply of chlorine gas and at the same time only the second open/close valve 601 is opened to supply ozone gas through the pipe 10 at 500 cc/min. to the one end of preform PF1. The evacuation pump simultaneously evacuates the inside from the dummy tube 8 side. Maintaining this state, ultraviolet rays of peak wavelength of about 253.7 nm are irradiated onto the preform PF1 for about thirty minutes. Namely, in this process the ozone gas is supplied with irradiation of ultraviolet rays in place of the oxy-hydrogen burner 14 in the drawing. By this treatment, the ozone gas chemically reacts with organic impurities such as oil in the dummy tubes 7, 8 and the through holes 5, 6 to be exhausted, thus cleaning such organic impurities.

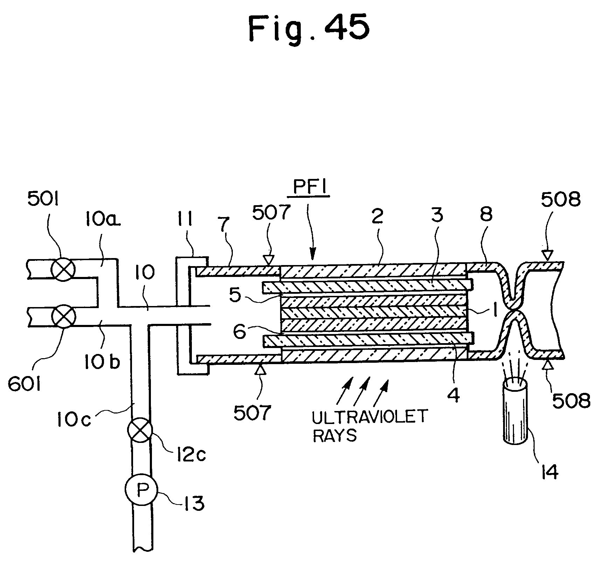

Then, as shown in Fig. 45, in continuation of the cleaning with ozone gas one side of dummy tube 8 is heated by the oxy-hydrogen burner 14 to be fusion-spliced, so that the opening end of dummy tube 8 is hermetically closed. Simultaneously, the second open/close valve 601 is closed to stop the supply of ozone gas, and the irradiation of ultraviolet ray is also stopped. In place of the fusion-splicing by heating one side of dummy tube 8, the seal may be made using a valve unit or element.

The present embodiment employed irradiation of ultraviolet rays with peak wavelength of about 253.7 nm during the cleaning with ozone gas, but the ultraviolet rays may be those with shorter wavelength than about 300 nm. When the ultraviolet rays with shorter wavelength than about 300 nm are irradiated in the ozone gas atmosphere, the C-C bond (carbon bond) or C-H bond (carbon-hydrogen bond) in organic materials can be dissociated. When the ultraviolet rays with peak wavelength 184.9 nm are irradiated in the ozone gas atmosphere additionally, oxygen is decomposed and ozone can also be produced from oxygen, obtaining excellent cleaning effect.

### Eleventh Embodiment

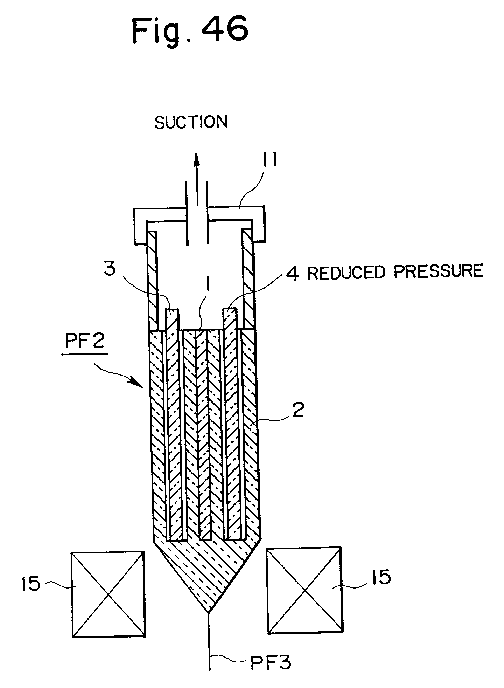

At the above eighth and ninth steps (S8, S9) the fiber drawing was carried out after sealing the polarization-maintaining optical fiber preform PF2, but without fusion-splicing of one end of dummy tube 8 as in Fig. 27 but with fusion-splicing of one end of dummy tube 7 as in Fig. 28 the preform PF2 may be drawn with suction on the side of cap 506 as shown in Fig. 46.

### Twelfth Embodiment

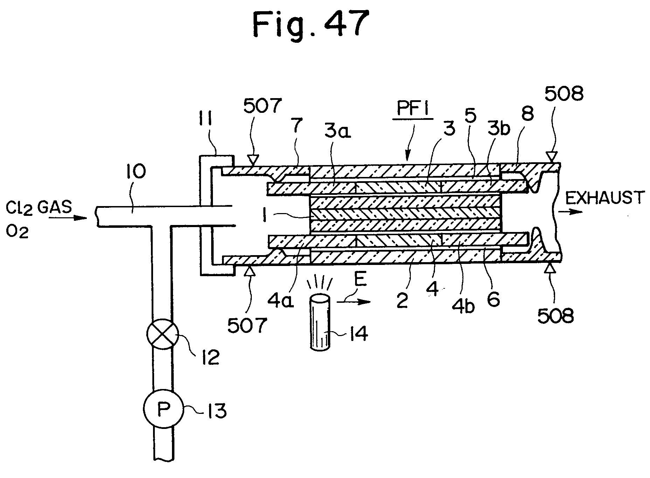

At the fifth step (S5) only the stress-applying members 3, 4 were inserted into the through holes 5, 6 (see Fig. 26 to Fig. 28). In addition to the stress-applying members 3, 4, rods 3a, 3b, 4a, 4b for supporting the stress-applying members 3, 4 may be inserted into the through holes 5, 6, as shown in Fig. 47.

Before the stress-applying members 3, 4 and the rods 3a, 3b, 4a, 4b are inserted, the dummy tube 7 is heated by the burner 14 while the preform PF1 is rotated. The heating temperature is nearly equal to the melting temperature of the dummy tube 7. The dummy tube 7 is stressed by shifting the chuck 64 to the chuck 63 in the condition the side wall 602 is fixed during the heating shown in Fig.21. Therefore, one potion of the dummy tube 7 is deformed so that one portion of the inner surface of the dummy tube 7 curves inward.

Similarly, the dummy tube 8 is heated by the burner 14 while the preform PF1 is rotated. The heating temperature is nearly equal to the melting temperature of the dummy tube 8. The dummy tube 8 is stressed by shifting the chuck 64 to the chuck 63 in the condition the side wall 602 is fixed during the heating shown in Fig. 21. Therefore, one potion of the dummy tube 8 is deformed so that one portion of the inner surface of the dummy tube 8 curves inward. After that, the stress-applying members 3, 4 and the rods 3a, 3b, 4a, 4b are inserted into the through holes 5, 6 as shown in Fig. 47. The rods 3a, 3b, 4a, 4b are supported by the portion of the dummy tubes 7, 8. Stress-applying members 3 and 4 are supported by the rods 3a, 3b and 4a, 4b, respectively.

After the stress-applying members 3, 4 are supported, the preform PF1 is performed with the above steps (6th step to 9th step) in the first embodiment. In this embodiment, the rods 3a, 3b, 4a, 4b have a higher melting point than the stress-applying members 3, 4. This arrangement makes the stress-applying members 3, 4 apart from the inner walls of the cladding 2, so that in heating the preform PF1, it can be heated at a temperature higher than the melting point of the stress-applying members 3, 4. Also, since the rods 3a, 3b, 4a, 4b have a higher melting point than the stress-applying members 3, 4, the rods 3a, 3b, 4a, 4b are kept from being fused to stick to the cladding 2 upon heating of dummy tubes 7, 8. So the stress-applying members 3, 4 are kept from being fused to stick to the cladding 2 upon heating of dummy tubes 7, 8. In addition, the length of stress-applying members 3, 4 can be made shorter, which can save the stress-applying members 3, 4.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

## Claims

1. A polarization-maintaining optical fiber fabrication process for fabricating a polarization-maintaining optical fiber from a column preform in which a core is buried in a cladding based on silica glass, comprising:
a first step of boring a through hole into said cladding away from said core and along a longitudinal direction of said core;
a second step of removing undesired impurities present on an inner surface in said through hole, wherein said second step comprises a surface treatment step for introducing a liquid which increases a width of a scratch formed on the inner surface in the through hole, into said through hole;
a third step of inserting a rod of a stress-applying member made of a material having a different thermal expansion coefficient from that of said cladding into said through hole;
a fourth step of sealing one end of said through hole formed in said cladding;
a fifth step of reducing the pressure in said through hole with said rod inserted therein down to a pressure lower than the atmospheric pressure; and
a sixth step of drawing a preform for polarization-maintaining optical fiber formed at said fifth step.

2. A polarization-maintaining optical fiber fabrication process according to Claim 1, wherein said liquid is a hydrofluoric acid solution.

3. A polarization-maintaining optical fiber fabrication process according to Claim 2, wherein said second step comprises an inorganic dissolving step for introducing a liquid which dissolves undesired inorganics into said through hole, prior to said surface treatment step.

4. A polarization-maintaining optical fiber fabrication process according to Claim 3, wherein said liquid which dissolves undesired inorganics is a liquid using at least one liquid of hydrochloric acid, nitric acid and sulfuric acid.

5. A polarization-maintaining optical fiber fabrication process according to Claim 4, wherein said second step comprises an organic dissolving step for introducing a liquid which dissolves undesired organics, into said through hole.

6. A polarization-maintaining optical fiber fabrication process according to Claim 5, wherein said liquid which dissolves undesired organics is a liquid using at least one liquid of methanol, ethanol, propanol and acetone.

7. A polarization-maintaining optical fiber fabrication process according to Claim 1, wherein said second step comprises a time period for applying ultrasonic waves to said preform.

8. A polarization-maintaining optical fiber fabrication process according to Claim 1, further comprising a flame-polishing step for flame-polishing the inner surface in said through hole between said second step and said third step.

9. A polarization-maintaining optical fiber fabrication process according to Claim 8, wherein said flame-polishing step is performed such that said preform is heated by a burner ejecting flame into the through hole.

10. A polarization-maintaining optical fiber fabrication process according to Claim 1, wherein said first step comprises a step of polishing the inner surface in said through hole up to roughness of 0 to 1 µm.

11. A polarization-maintaining optical fiber fabrication process according to Claim 1, wherein said second step makes roughness of inner surface in said through hole within the range of 0 to 2 µm.

12. A polarization-maintaining optical fiber fabrication process according to Claim 1, further comprising a plasma heating step between said second step and said third step, said plasma heating step, while keeping the inside of said through hole in an atmosphere of a rare gas with a pressure lower than the atmospheric pressure, changing said rare gas into plasma thereof.

13. A polarization-maintaining optical fiber fabrication process according to Claim 12, wherein said changing of rare gas into plasma is conducted by applying high-frequency waves to said preform.

14. A polarization-maintaining optical fiber fabrication process according to Claim 12, wherein said changing of rare gas into plasma is conducted by irradiating said preform with electromagnetic waves.

15. A polarization-maintaining optical fiber fabrication process according to Claim 1, comprising a first gas cleaning step between said surface treatment step in said second step and said third step, of introducing a gas which removes undesired impurities present in said through hole, into said through hole;
wherein said first gas cleaning step comprises:
a step of introducing a first gas which reacts with inorganics when activated, into said through hole;
a first gas activating step of activating said first gas;
a step executed after said first gas activating step, of introducing a second gas which reacts with organics when activated, into said through hole; and
a second gas activating step of activating said second gas.

16. A polarization-maintaining optical fiber fabrication process according to Claim 1, comprising between said surface treatment step in said second step and said third step:
a step of introducing a mixed gas of a first gas which reacts with inorganics when activated and a second gas which reacts with organics when activated, into said through hole; and
a gas activating step for activating said mixed gas.

17. A polarization-maintaining optical fiber fabrication process according to Claim 1, further comprising a second gas cleaning step between said third step and said fourth step, of introducing a gas which removes undesired impurities present in said through hole, into said through hole;
wherein said second gas cleaning step comprises:
a step of introducing a first gas which reacts with inorganics when activated, into said through hole;
a first gas activating step of activating said first gas;
a step executed after said first gas activating step, of introducing a second gas which reacts with organics when activated, into said through hole; and
a second gas activating step of activating said second gas.

18. A polarization-maintaining optical fiber fabrication process according to Claim 1, further comprising between said third and said forth step:
a step of introducing a mixed gas of a first gas which reacts with inorganics when activated and a second gas which reacts with organics when activated, into said through hole; and
a gas activating step for activating said mixed gas.

19. A polarization-maintaining optical fiber fabrication process according to Claim 15, 16, 17 or 18, wherein said first gas contains a chlorine-based gas.

20. A polarization-maintaining optical fiber fabrication process according to Claim 19, wherein said first gas is a mixed gas of the chlorine-based gas and oxygen gas.

21. A polarization-maintaining optical fiber fabrication process according to Claim 15, 16, 17 or 18, wherein said second gas contains oxygen gas.

22. A polarization-maintaining optical fiber fabrication process according to Claim 21, wherein said second gas is a mixed gas of the oxygen gas and a chlorine-based gas.

23. A polarization-maintaining optical fiber fabrication process according to Claim 15 or 17, wherein said first gas activating step is effected by supplying heat to said first gas from the outside of said preform.

24. A polarization-maintaining optical fiber fabrication process according to Claim 23, wherein said supplying heat to said first gas is made by heating said preform.

25. A polarization-maintaining optical fiber fabrication process according to Claim 15 or 17, wherein said first gas activating step is effected by changing said first gas into plasma thereof.

26. A polarization-maintaining optical fiber fabrication process according to Claim 15 or 17, wherein said second gas activating step is effected by supplying heat to said second gas from the outside of said preform.

27. A polarization-maintaining optical fiber fabrication process according to Claim 26, wherein said supplying heat to said second gas is effected by heating said preform.

28. A polarization-maintaining optical fiber fabrication process according to Claim 15 or 17, wherein said second gas activating step is effected by changing said second gas into plasma.

29. A polarization-maintaining optical fiber fabrication process according to Claim 16 or 18, wherein said gas activating step is effected by supplying heat to said mixed gas from the outside of said preform.

30. A polarization-maintaining optical fiber fabrication process according to Claim 29, wherein said supplying heat to the mixed gas is effected by heating said preform.

31. A polarization-maintaining optical fiber fabrication process according to Claim 16 or 18, wherein said gas activating step is effected by changing said mixed gas into plasma thereof.

32. A polarization-maintaining optical fiber fabrication process according to Claim 25, 28 or 31, wherein said changing the mixed gas into plasma is effected by applying high-frequency waves to the outside of said preform.

33. A polarization-maintaining optical fiber fabrication process according to Claim 25, 28 or 31, wherein said changing the mixed gas into plasma is effected by irradiating said preform with electromagnetic waves.

34. A polarization-maintaining optical fiber fabrication process according to Claim 1, further comprising a second gas cleaning step between said third step and said fourth step, of introducing a gas which removes undesired impurities present in said through hole, into said through hole;
wherein said second gas cleaning step comprises:
an ozone gas introducing step of introducing ozone gas into said through hole while irradiating said preform with ultraviolet rays.

35. A polarization-maintaining optical fiber fabrication process according to Claim 34, wherein said second gas cleaning step comprises, prior to said ozone gas introducing step, a step of introducing a first gas which reacts with inorganics when activated, into said through hole, and a first gas activating step of activating said first gas.

36. A polarization-maintaining optical fiber fabrication process according to Claim 35, wherein said first gas contains a chlorine-based gas.

37. A polarization-maintaining optical fiber fabrication process according to Claim 34 or 35, wherein a wavelength of said ultraviolet rays is shorter than 300 nm.

38. A polarization-maintaining optical fiber fabrication process according to Claim 1, further comprising a step of introducing helium gas into said through hole, between said third step and said fourth step.

39. A polarization-maintaining optical fiber fabrication process according to Claim 1, further comprising a helium gas introducing step of introducing helium gas into said through hole, between said fifth step and said sixth step.

40. A polarization-maintaining optical fiber fabrication process according to Claim 39, further comprising a step of reducing the pressure in said through hole down to a pressure lower than the atmospheric pressure, between said helium gas introducing step and said sixth step.

41. A polarization-maintaining optical fiber fabrication process according to Claim 1, wherein prior to said third step, said rod of a stress-applying member is cleaned using a liquid which etches silica glass.

42. A polarization-maintaining optical fiber fabrication process according to Claim 1, wherein support rods made of a material with a higher melting point than said stress-applying member are set on the both ends of said rod of stress-applying member placed in said through hole.
